(19) Europäisches Patentamt
European Patent Office
Office européen des brevets

(11) **EP 1 118 953 A2**

(12) **EUROPEAN PATENT APPLICATION**

(43) Date of publication:
**25.07.2001   Bulletin 2001/30**

(51) Int Cl.⁷: **G06F 17/60**

(21) Application number: **01200200.2**

(22) Date of filing: **19.01.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **21.01.2000   US 489769**

(71) Applicant: **OptiMark, Inc.**
**Jersey City, NJ 07302 (US)**

(72) Inventors:
• **Atchison, David**
**Jersey City, NJ 07302 (US)**

• **Richard, John T.**
**Jersey City, NJ 07302 (US)**
• **Lupien, William A.**
**Jersey City, NJ 07302 (US)**
• **Smigel, Murray**
**Jersey City, NJ 07302 (US)**
• **Fabiszak, Catherine M.**
**Jersey City, NJ 07302 (US)**

(74) Representative: **Cookson, Barbara Elizabeth**
**Nabarro Nathanson,**
**Lacon House,**
**84 Theobald's Road**
**London WC1X 8RW (GB)**

(54) **Three stage matching system for crossing network**

(57)     A system for anonymous trading of securities and continuously matching buyers with sellers maintains a database (4) of buyer and seller profiles (6, 8). Each profile is a matrix of values defining the satisfaction density value for each element in an array that plots price against size of trade. The values range between 0 for a forbidden deal (no satisfaction) to 1 for the preferred quantity and price of the deal. The profiles are created by traders using their own input devices (16,18,20). A trader may enter a profile directly or a trader's CPU (10, 12, 14) may generate them from other inputs. A central matching controller (2) computes a mutual satisfaction cross product for each pair of buy/sell profiles for the same stock and matches the buyers and sellers in the order in which the cross products rank. The process is carried out in a sequence of three cycles. In the first two cycles different priority rules are used. During the third cycle synthetic profiles are generated from the available profiles and the matching process is carried out using these profiles. This type of synthetic profile matching can be carried out independently.

FIG. 1

EP 1 118 953 A2

**Description**

Cross-Reference To Related Applications

The present application is a continuation-in-part of U.S. Appln. Serial No. 09/430,319 filed October 29, 1999, which is a continuation in part of U.S. Appln. Serial No. 08/945,074 filed October 21, 1997, the disclosures of which are incorporated herein by reference in their entireties

Field of Invention

The present invention is directed to an automated crossing network (also known as a matching system) and method, and in particular, to an anonymous and confidential crossing network that matches buy and sell orders by maximizing the mutual satisfaction of traders submitting orders.

Copyright Notice

A portion of the disclosure of this patent document contains material which is subject to copyright protection. The copyright owner has no objection to the facsimile reproduction by anyone of the patent document or patent disclosure as it appears in the Patent and Trademark Office, patent file or records, but otherwise reserves all copyright rights whatsoever.

Background of the Invention

Traditionally, traders and investors who desired to buy or sell securities placed orders with brokers who traded on the floor of organized stock exchanges, such as the New York Stock Exchange or the NASDAQ market. Traders and investors, particularly institutional investors, are increasingly balking at the high cost of trading on organized exchanges and in the OTC (Over-The-Counter) market. Discontent with the expense of using intermediaries and the cost of market impact has contributed to the development of the electronic fourth market for crossing trades. See "Reshaping the Equity Markets, A Guide for the 1990s" by Robert A. Schwartz, Harper Business, 1991, especially at pp. 93-95.

Various companies and exchanges operate computerized crossing networks, also called anonymous matching systems. In an anonymous matching system, the identity of the source of an order (e.g., the name of a trader or firm submitting the order) is not disclosed to other traders. By way of example, crossing networks used in connection with the trading of trading instruments are disclosed in U.S. Pat. No. 4,412,287, which discloses an automated stock exchange in which a computer matches buy and sell orders for a variety of stocks; U.S. Pat. 3,573,747, which discloses an anonymous trading system for selling fungible properties between subscribers to the system; U.S. Pat. 3,581,072, which discloses the use of a special purpose digital computer for matching orders and establishing market prices in an auction market for fungible goods; U.S. Pat. 4,674,044, which discloses an automated securities trading system; U.S. Pat. 5,136,501, which discloses an anonymous matching system for effectuating trades through automatic matching in which buyers and sellers who are willing to trade with one another based on specified criteria, such as price, quantity and credit, may automatically trade when matching events occur satisfying these criteria; and U.S. Pat. No. 5,101,353, which discloses an automated system for providing liquidity to securities markets in which orders are entered by the system and executed in real time either internally between system users or externally with stock exchanges and markets.

Crossing networks have a number of advantages, including: (a) traders need not search for a contra party; and (b) anonymity is preserved.

Existing facilities for crossing trades include Instinet's Crossing Network and POSIT (Portfolio System for Institutional Trading) which is jointly owned by Jefferies and BARRA. The Instinet Crossing Network has an equities trading service to match buyers and sellers anonymously at set times. Computers pair buyers with sellers on a time priority basis. Trades are executed at the closing price for exchange-listed issues, and at the midpoint of the inside market (best bid and ask) for OTC issues.

POSIT, for example, enables large investors to trade baskets of stocks among themselves. The orders are sent to a central computer where they are electronically matched with other orders. Unlike Instinet's Crossing Network, POSIT crosses are done during the trading day. The prices are obtained from those quoted on the exchanges, a practice known as "parasitic pricing." See "Reshaping the Equity Markets, A Guide for the 1990s" cited above.

Instinet, owned by Reuters, also operates an electronic block-trading system that facilitates the negotiation of block trades between institutional investors and brokers. Instinet allows parties to trade anonymously, entering bids electronically. Instinet subscribers can respond to an "order" entered into the system either by matching a displayed price or by making a counter bid or offer that is transmitted instantaneously to the contra party's terminal. The trades that result from these negotiations become public information only when they are executed. This procedure provides an alternative to the direct human-to-human negotiation of orders in the upstairs market or on the trading floors. Instinet provides a limit order book for over-the-counter (OTC) securities and listed securities and also provides inside quotes for exchange listed securities for the seven U.S. exchanges on which stocks can be traded and for NASDAQ listed securities.

Many crossing networks function independently of existing stock exchanges. However, some crossing networks are operated by stock exchanges.

For example, the Match Market Exchange ("MMX") was operated by the Chicago Stock Exchange. All matched orders were executed at a random time within a predetermined ten minute window at the market price at such time. The market price was calculated based upon the spread of a particular issue. Rather than matching orders on the basis of time priority, the MMX system used liquidity fees and liquidity credits to determine the level of priority for order matching. Those users willing to pay the highest liquidity fee had the highest execution priority. See 59 F.R. 5451 (February 4, 1994).

Crossing networks that automatically match buy and sell orders often concentrate trading at a single point of time, and can be called a batch process matching system. There is a need, however, for an anonymous crossing network that continuously, and in real-time, satisfies the buying and selling desires of an arbitrary number of market participants.

A major problem encountered in the design of crossing networks is that of determining how to match buyers and sellers. Existing approaches to this problem include:

a) Take-out strategies, where overlapping bids and offers are matched at the midpoint of the overlapped bid and ask prices, with priority given to buyers and sellers in order of price. This assumes a significant quantity of non-disclosed orders in the system; otherwise, there would be no incentive for overlap, and take-out would start at the disclosed best bid/offer prices, just like the Instinet book.

b) Single price auction strategies, where a single, size-weighted average price is computed from overlapping bid and offer prices, and everyone is filled at that price. Again, traders would have to be confident of a significant number of non-disclosed orders in the system to have the incentive to enter orders at a better price than the best disclosed price.

c) Premium strategies (as in the Chicago MMX system), where bids and offers have an associated positive or negative premium, and crossing takes place at the midpoint of market spread or at the minimum necessary premium differential from the midpoint, with priority given in order of premium. Here, the premium-based priority in matching provides the incentive for offering higher premiums.

Each of the above approaches is a batch process that relies upon ad hoc rules of competition among a relatively small set of discrete orders as being the means of arbitrating the crossing network participants' buy/sell entries. In the real world of trading, orders to buy or sell can enter the market at any time, and discrete orders in a crossing network often represent only an approximate and partial expression of the order fill that would satisfy the trader. For institutional traders in particular, an individual order seldom represents the full desired fill size, and the trader must then employ multiple orders at different prices (and generally in different markets) to achieve his ultimate fill.

Typically, existing crossing networks allow discrete buy or sell orders to be entered, e.g., "sell 10,000 IBM at 64." However, as stated above many traders, particularly institutional traders, wish to deal in baskets of securities, so that, for example, a portfolio is as far as possible, "balanced." Existing crossing networks do not easily allow traders to enter combinations of orders, such as "sell 10,000 IBM at 64 only if I can buy 20,000 DEC at 32". Furthermore, existing crossing networks do not allow traders to enter combinations of orders, such as "sell 10,000 IBM at 64 or sell 100,000 IBM at 63." Traders often have trading strategies such as, for example, "buy 3,000 IBM at 33, but if I can buy 5,000, I would be prepared to pay 33 and ½", that cannot be handled by existing crossing networks.

Given the above limitations of conventional crossing networks, a more satisfactory approach to the overall problem of continuously satisfying the buying and selling desires of an arbitrary number of market participants is needed. Furthermore, a crossing network is needed that will guarantee mathematical optimality of the matching process, so that each participant is assured that the overall outcome of the process (in terms of the price and size of all fills) has maximized the joint satisfaction of all participants.

Summary of the Invention

The present invention is directed to a computerized crossing network that allows traders to input as orders a satisfaction density profile and maximum size limit which at once characterizes the trader's degree of satisfaction to trade at any and all prices and sizes, up to the aggregate (or size) limit, and that matches orders (as represented by each trader's satisfaction density profile) so that each trader is assured that the overall outcome of the process (in terms of average price and size of fill) has maximized the mutual satisfaction of all traders.

The satisfaction density profile is a two-dimensional grid or matrix (which could also be represented as a two-dimensional graph or in another two-dimensional format), one dimension being price and the second dimension being size of transaction, that as a whole characterizes the trader's degree of satisfaction for a transaction at each (price, size) coordinate. Each element of the satisfaction density profile, called a satisfaction density value, indicates the trader's degree of satisfaction to trade that size order at that price. In the representative embodiment, each satisfaction density value is a number between zero and one, with zero representing no satisfaction (i.e., will under no circumstances trade that quantity at that price) and one representing total satisfaction.

Each trader can input one or more satisfaction density profiles. In a representative embodiment, each satisfaction density profile can be represented and input as a graph of at least two dimensions, such as, for example, as a temperature grid or two dimensional matrix. In another embodiment, a trader may input a limit order that may be converted into a satisfaction density profile.

In a representative embodiment, once the satisfaction density profile is complete, the trader causes the satisfaction density profile to be transmitted to a central matching controller ("CMC"), which anonymously matches buy and sell orders as discussed below. In this embodiment, the CMC may maintain the characteristics of the orders represented by the satisfaction density profiles confidential.

In the case of a system for trading equity securities, such characteristics may include the name of a security, a price of a security, a quantity of shares of a security, a preference value for trading a particular security at a certain price and volume, conditions relating to the way in which the buy/sell order for a particular security should be filled or satisfied (e.g., all/none, fill or kill, immediate or cancel, corporate buy back, etc.), and combinations thereof.

For the purpose of explanation, assume a batch process in which multiple traders enter satisfaction density profiles that represent either buy or sell orders for a particular stock. Upon transmission of the satisfaction density profiles to the CMC, the CMC will cause buy profiles to be stored in a buy profile database and sell profiles to be stored in a sell profile database. The CMC will then calculate, for every buy/sell profile pair, a mutual satisfaction cross product. The mutual satisfaction cross product represents the degree to which that buy/sell pair can satisfy each other. Next, the individual grid values of the mutual satisfaction cross products for all buy/sell combinations are ranked in order, starting with the highest value of mutual satisfaction. The buy/sell orders represented by the ranked grid values of the mutual satisfaction cross products are then matched in order, and matching trades are aggregated by the CMC system. The matching process then continues down the ranked list.

The present invention can be operated as a batch crossing network, where orders are matched at set times. Alternatively, the present invention can be operated as a continuous crossing network by treating each new satisfaction density profile that is entered as a triggering event that causes a new round of computation as described above.

One aspect of the subject invention is directed to a method for matching orders. The method includes the steps of receiving a plurality of orders, wherein each order has a source and characteristics associated therewith; maintaining the source of the plurality of orders anonymous; maintaining the characteristics of the plurality of orders confidential; and matching at least some of the orders based on a mutual satisfaction function.

Another aspect of the subject invention is directed to a method for matching orders. The method includes the steps of creating plurality of buy and sell kernels based on buy and sell orders for a security. Each kernel has a price of the security at which a trader is willing to buy/sell the security, a minimum and maximum volume of the security that the trader is willing to buy/sell, and priority characteristics associated therewith. The method also includes the steps of sorting the buy and sell kernel based on the priority characteristics; selecting a buy/sell kernel from the sorted buy and sell kernels; and aggregating sell/buy kernels against the selected buy/sell kernel at the price associated with the kernel. The method may also include the steps of altering the price of the selected kernel; aggregating sell/buy kernels against the selected buy/sell kernel at the altered price; and executing a trade of the security associated with the kernel at the altered price.

Yet another aspect of the subject invention is that the matching process is conducted in three stages and includes the steps of conducting a first matching cycle in which contra side buy and sell orders having a first set of characteristics are matched in accordance with a first set of priority rules to facilitate a trade therebetween, conducting a second matching cycle in which contra side buy and sell orders having a second set of characteristics are matched in accordance with a second set of priority rules to facilitate a trade therebetween, generating synthetic buy and sell orders by aggregating available volume remaining in the plurality of buy and sell orders at the conclusion of the first and second matching cycles, and conducting a third matching cycle in which synthetic buy and sell orders are matched with contra side orders in accordance with the second set of priority rules to facilitate a trade therebetween. It is envisioned that the third stage of the matching process could be implemented independently.

Brief Description of the Drawings

So that those having ordinary skill in the art to which the subject invention pertains will more readily understand how to employ the crossing network and methodology of the subject invention, preferred embodiments thereof will be described in detail hereinbelow with reference to the drawings, wherein:

Fig. 1 is a block diagram of a representative system operating according to the present invention;
Fig. 2 is an example satisfaction density profile for a sell order;
Fig 2A is another example of a satisfaction density profile for a sell order;
Figs. 3A through 3D are example satisfaction density profiles in contour plot format;
Fig. 4 is an example interface window, used to set parameters for and enable input of satisfaction density profiles;
Fig 4A is another example of a parameter window;
Fig. 5 is a load pattern interface window, used to load parameterized satisfaction density profile templates;
Fig 5A is an example of a template selection window;
Figs. 6A-6B illustrate two halves of an example screen display showing an interface window, a load pattern interface window and a satisfaction density profile;
Fig 6C is another example of an interface window, a load pattern interface window and a satisfaction density profile;
Fig. 7 is an example buy satisfaction density profile displayed as a temperature graph;
Fig 7A is another example of a buy profile which incorporates a temperature graph;
Fig. 8 is a flowchart which illustrates the logic flow of the matching process in accordance with one aspect of the subject invention;
Figs. 9A through 9C are example mutual satisfaction cross products, represented as contour graphs;
Fig. 10 depicts a preference profile for use in an exemplary embodiment of the subject invention for use with a particular host exchange;
Fig. 11 shows an illustration of explicit price and volume controls in accordance with one aspect of the present invention;
Fig. 12 shows an illustration of implicit price controls generated by the system according to another aspect of the present invention;
Fig. 13 is an illustration of a preference profile with no implicit price controls according to yet another aspect of the present invention;
Fig. 14 is an illustration of coordinates with and without standing according to a further aspect of the present invention;
Fig. 15 is a flow chart representing the sequential steps of the matching algorithm of the subject invention;
Fig. 16 is a flow chart representing the sequential steps of the aggregation stage of the matching algorithm of Fig. 15;
Fig. 17 is a flow chart representing the sequential steps of the negotiation stage of the matching algorithm of Fig. 15;
Fig. 18 is an illustration of a scaled back buy profile;
Fig. 19 is an illustration of a profile set representing two limit buyers A and B, and two limit sellers C and D;
Fig. 20 is an illustration of the construction of synthetic profiles E and F;
Fig. 21 is an illustration of the construction of a set of synthetic profiles using multiple profiles on one side of the market which have standing and overlap in price;
Fig. 22 is an illustration of a set of partial preference profiles;
Fig. 23 is an illustration of the construction a set of synthetic profiles generated from the partial preference profiles of Fig. 22;
Fig. 24 is an illustration of a profile which has multiple kernels at $50; and
Fig. 25 is a flow chart representing the sequential steps of the three stage matching process of the subject invention.

Detailed Description of the Disclosure

The present invention is described below in the context of trading equity securities. However, the invention is not so limited and can be easily adapted to allow the trading of anything that can be bought or sold, including liquid assets such as futures, derivatives, options, bonds, currencies, commodities, insurance contracts, and the like. It is also envisioned that the invention may be employed to trade media time, airline tickets, concert tickets, electronic components, or any contract for goods or services. Therefore, as used herein, the term instrument is used in its broadest meaning to cover anything that may be bought or sold. Accordingly, where the context permits, the terms "securities", "stock", and "shares" when used herein includes other instruments that can be traded, such as, for example, futures, derivatives, options, bonds and currencies. The terms "buy" and "sell" include, where appropriate, put and call, bid and offer, etc.

Intended users of the representative embodiment system of this invention are typically investors, such as institutional investors (e.g., a pension fund) but may also be individual investors, brokers or others who deal in or trade securities. As used herein, the term "user", "trader" or "investor" means that person or entity who wishes to make a trade.

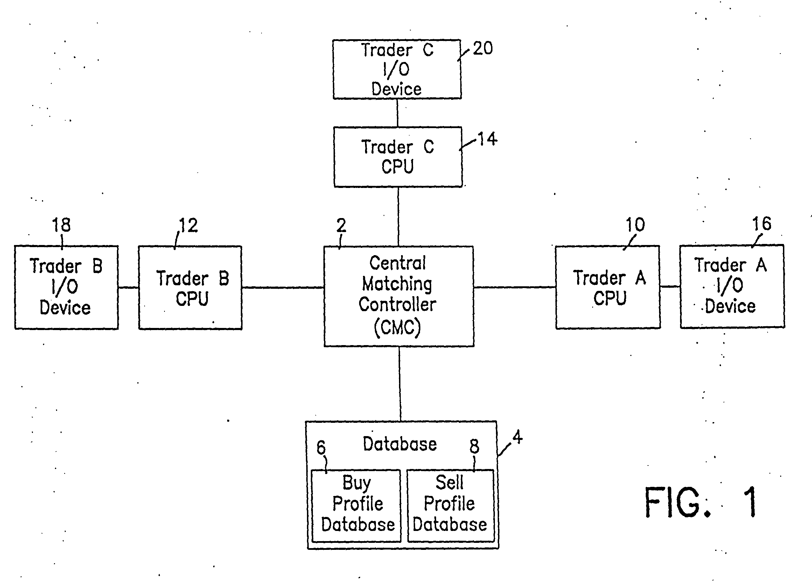

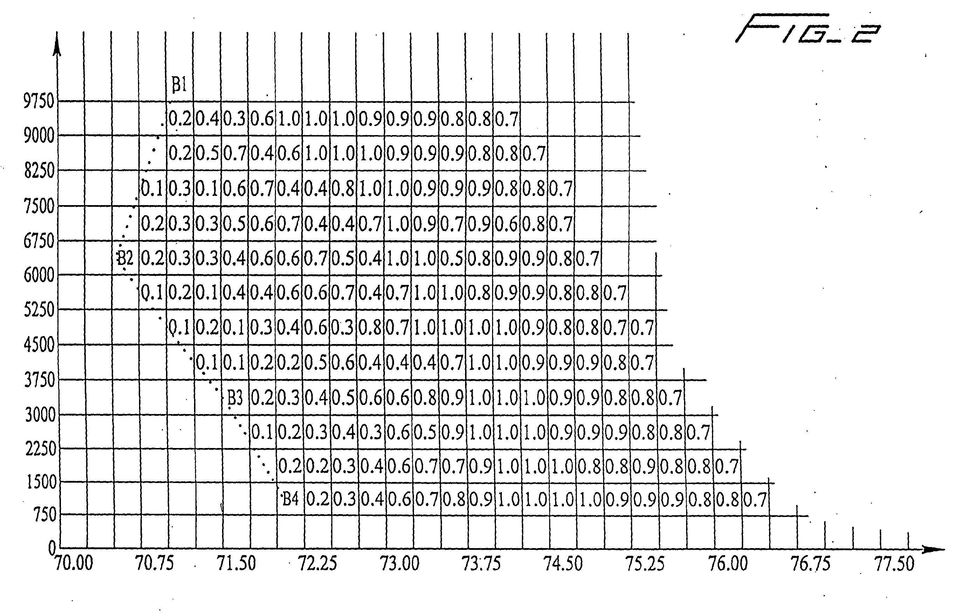

Referring now to the drawings, and initially Fig. 1, there is illustrated a block diagram of the overall architecture of the crossing network according to the present invention. A central matching controller ("CMC") 2 matches buy and sell orders transmitted to the CMC from various trader terminals, e.g., 10, 12, 14. The CMC 2 is preferably a supercomputer that can perform matrix calculations at rates of multiple gigaflops, such as, for example with present technology, an IBM SP2 or an Intel PARAGON supercomputer. A storage device 4 is coupled to the CMC 2. The storage device 4 comprises a database for storing buy and sell satisfaction density profiles. In the representative embodiment, buy satisfaction density profiles can be stored in a buy profile database 6 and sell satisfaction density profiles can be stored in a sell profile database 8.

Each trader who wished to trade will have access to a trader terminal, such as trader CPU 10, 12, 14. Ideally, the trader terminals 10, 12, 14 are high powered personal computers or workstations. The trader terminals 10, 12, 14 are coupled to the CMC 2. Trader terminals may be coupled to the CMC 2 over a wide area network (WAN) and/or over the Internet. Each trader terminal includes one or more input/output devices 16, 18, 20 that allow for the entry of satisfaction density profiles and the display of output, such as matching trades. In an alternate embodiment, a trader may input a buy or sell order as a limit order. In this case, software residing within either the CMC 2 or a trader terminal 10, 12, 14 may convert the limit order into a satisfaction density profile.

Each order has a source and characteristics associated therewith. The source of an order identifies the person or entity submitting the order (e.g., the name of a trader, a specialist, a market maker, a firm, and combinations thereof). A characteristic of an order is information that relates to the order, for example, a name of a security, a price of a security, a quantity of shares of a security, conditions relating to the order for a security, and combinations thereof. The conditions relating to the order for a security (e.g., "Day," "All or none," "Fill or kill," "Immediate or cancel," "Good until first fill," and "Corporate buy back") are described in more detail below.

In one embodiment, the CMC 2 maintains the identity of the sources of orders anonymous and maintains the characteristics of the orders represented by the profiles confidential. Thus, in this embodiment, the sources and characteristics of the orders submitted to the CMC 2 are not disclosed to other traders. This reduces the market impact that an order might otherwise have on the price of a security.

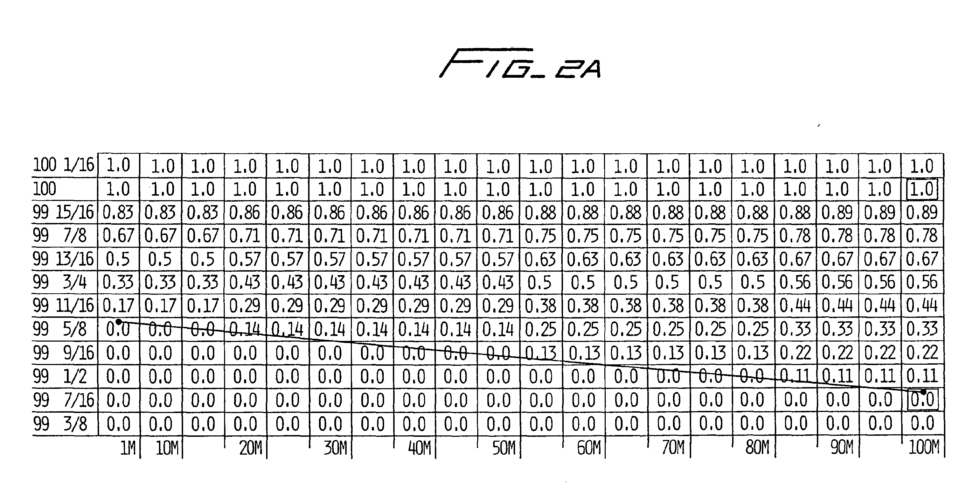

Turning now to Fig. 2, there is illustrated an example satisfaction density profile for a sell order. In the representative embodiment, each security that a trader wishes to trade requires the creation of a satisfaction density profile. The satisfaction density profile as shown in Fig. 2 is a two-dimensional grid. Quantity is represented on the vertical axis and price is represented on the horizontal axis. (The ranges and scale of each axis can be set by the trader or automatically set by the present invention.) The satisfaction density levels are described by the numbers shown.

The satisfaction density profile characterizes the trader's range of interest in the transaction at each (price, size) combination. The trader is required to enter in one or more places on the satisfaction density profile a satisfaction density value, indicating the trader's willingness to trade that size order at that price. In the representative embodiment shown in Fig. 2, each satisfaction density value is a number between and including zero and one, with zero representing no satisfaction (i.e., will under no circumstances trade that quantity at that price and one representing total satisfaction. (Under certain conditions, Profiles may display fills in coordinates with 0.0 satisfaction. For example, as explained hereinbelow, a Pegged Profile may display fills in a 0.0 coordinate if its contour lines had been adjusted prior to the matching cycle such that the coordinate had a non-0.0 satisfaction value and received a fill. A non-pegged Profile may display fills in 0.0 coordinates only if all fills at that price sum to a volume containing a non-0.0 satisfaction value.)

Thus, for example, Fig. 2 shows that the trader is fully willing to sell 7,500 at $73, but under no circumstances is willing to sell any quantity at $70.25. The satisfaction density value to sell 2,250 at $72.25 is 0.3, indicating a limited degree of satisfaction. Fig. 2 shows that the trader is more willing to sell 8,250 at $72.75 then 1,500 at $73.25.

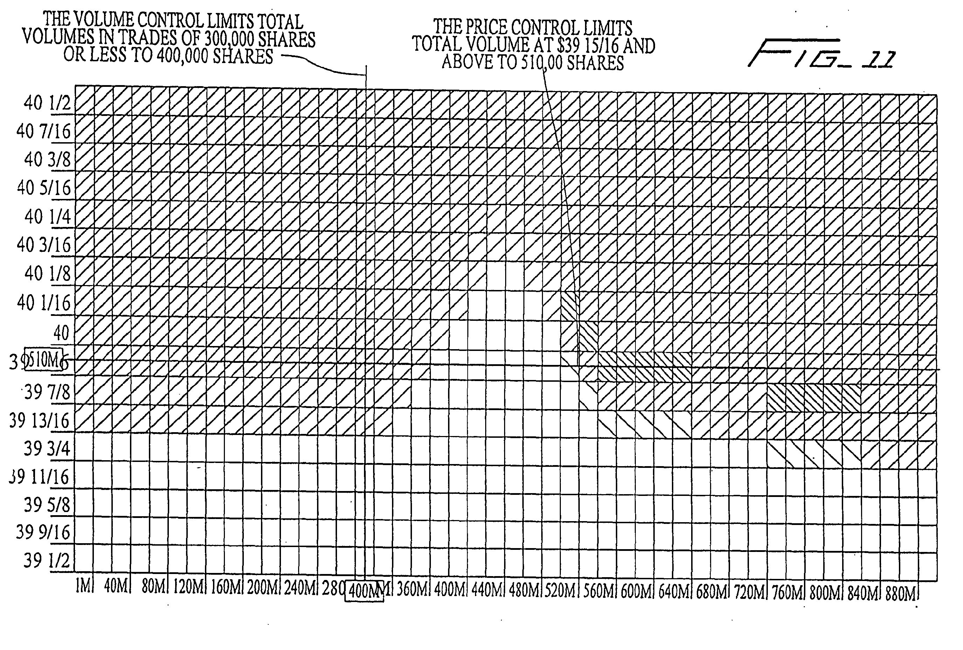

In Fig. 2, a boundary is shown, marked B1-B2-B3-B4. Using known drawing program techniques, the user is able to draw a boundary on the satisfaction density profile. On one side of the boundary, the user can enter satisfaction density values. On the other side of the boundary, the satisfaction density values are automatically set to zero. Fig. 11 displays the way in which boundaries are drawn by the user/trader in the system of the subject invention. Price boundaries are horizontal lines drawn across the grid at a specific price. Size boundaries are vertical lines drawn across the grid at a specific volume.

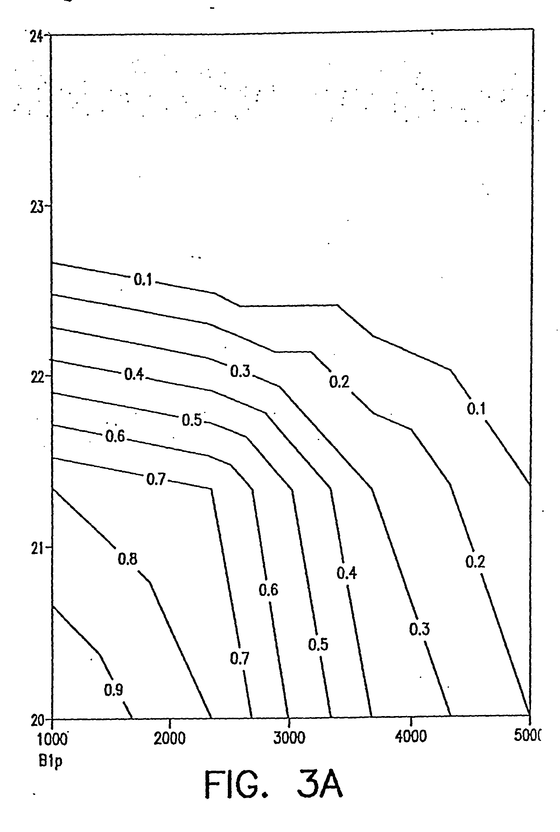

In Fig. 3A, there is illustrated an example satisfaction density profile for a buy order. The satisfaction density profile as shown in Fig. 3A is a contour plot on a two-dimensional grid. Price is represented on the vertical axis and quantity is represented on the horizontal axis. The satisfaction density levels are described by the contours shown. In the representative embodiment of Fig. 3A, each satisfaction density value is a number between and including zero and one, with zero representing no satisfaction to trade at that price - and one representing total satisfaction to trade at that price.

Thus, for example, Fig. 3A shows that the trader would be highly satisfied to buy 1,500 at $20.50, but under no circumstances is willing to buy any quantity at $24. The satisfaction density value for a buy of 3,000 at $20 is 0.6, indicating a more limited degree of satisfaction. Fig. 3A shows the trader is more willing to buy 2,000 shares at $21 than 4,000 shares at $21.

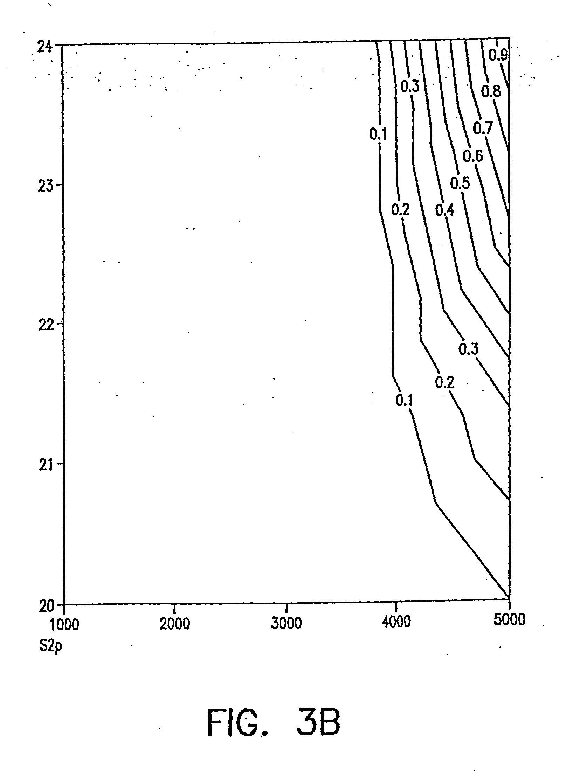

Fig. 3B shows an example satisfaction density profile for a sell transaction in the same format as the contour plot in Fig. 3A. The satisfaction density profile of Fig. 3B could represent, for example, an agency sell order.

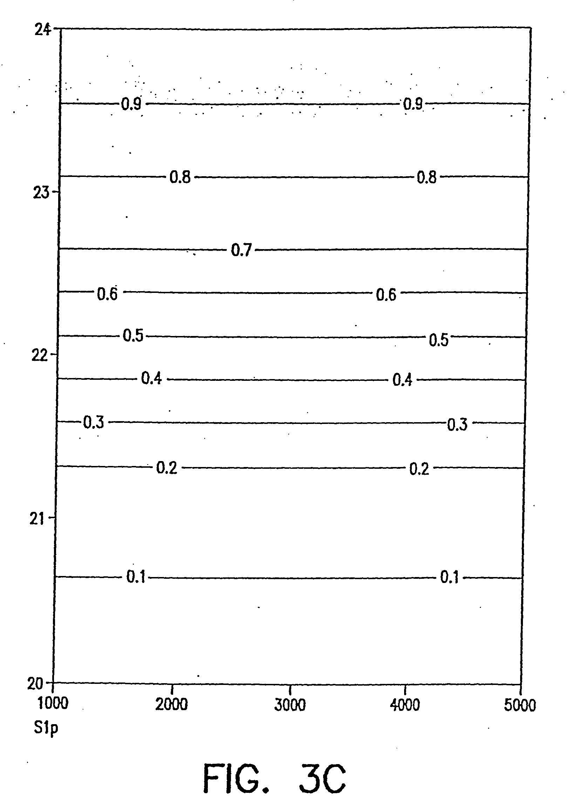

As another example, Fig. 3C shows a satisfaction density profile for a sell transaction. Fig. 3C illustrates a "soft" limit order.

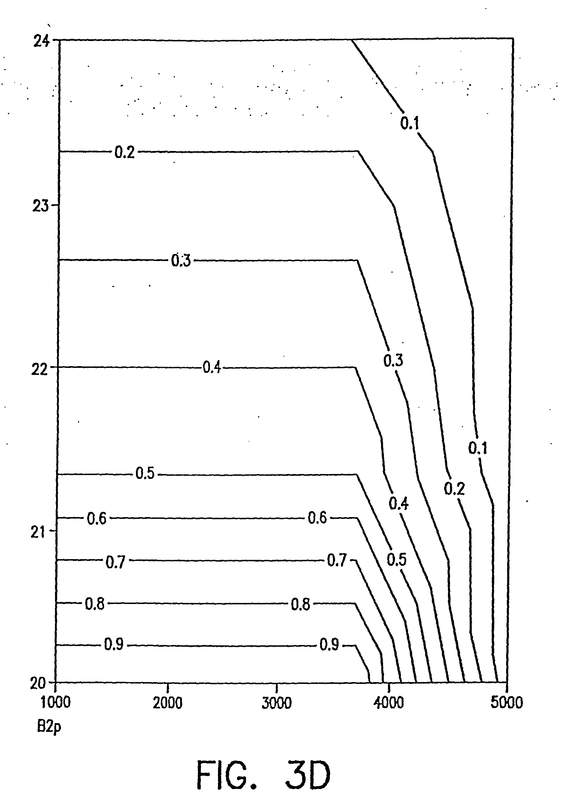

As another example, Fig. 3D shows a satisfaction density profile for a buy transaction.

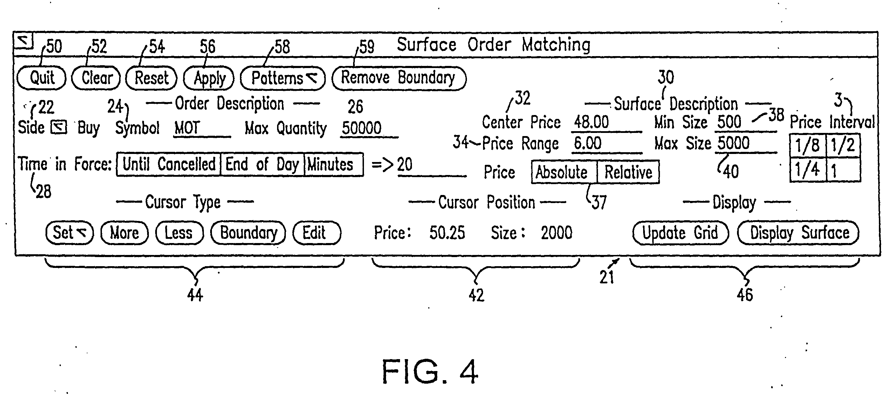

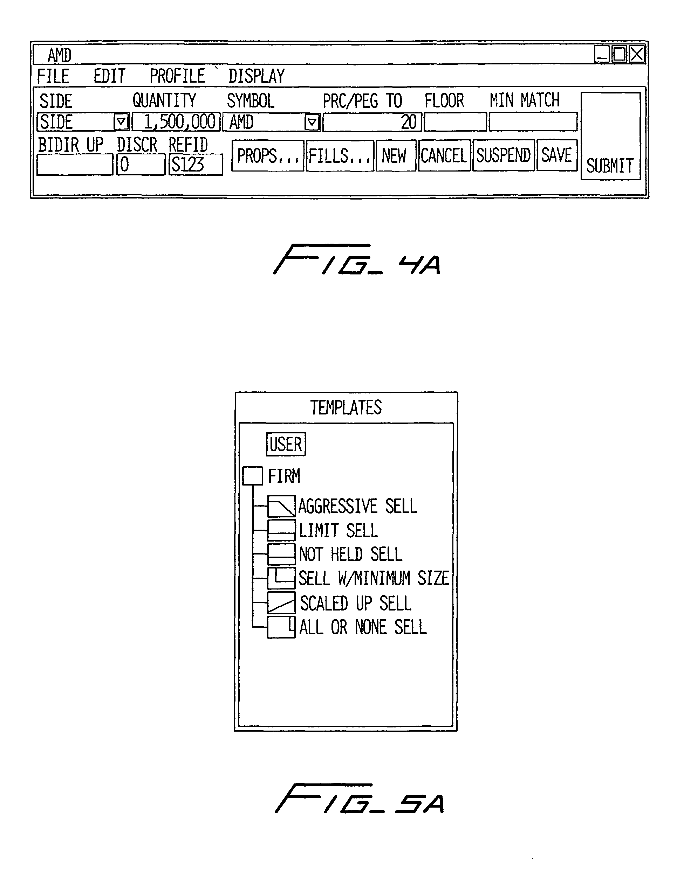

Turning now to Fig. 4, there is illustrated an example interface window 21 that can be used by a trader to set parameters when inputting a satisfaction density profile. In the representative embodiment, the interface window 21 is displayed on an Input/Output device (e.g., 16, 18, 20). The interface window 21 in the representative embodiment can be manipulated according to standard graphical user interface (GUI) commands by a user using, for example, a mouse and a keyboard.

A Side indicator 22 allows the trader to set the type of transaction, e.g., buy, sell, sell short etc. A Symbol indicator 24 allows the trader to set the instrument being traded, e.g., for stocks, the ticker symbol; for futures, the futures symbol, etc. A Maximum Quantity indicator 26 allows the trader to set the maximum quantity to be traded. In Fig. 4, the trader has entered a buy profile to buy a maximum quantity of 50,000 Motorola shares.

The trader can also set a Time-in-Force indicator 28 that determines for how long the order will be valid. Examples of valid Time-in-Force settings include "good until canceled", "good until end of day" and for a set period of time.

A Surface Description section 30 of the interface window 21 allows the trader to define the dimensions of the satisfaction density profile. A Center Price parameter 32 is used to set the price that is displayed in the center of price axis of the satisfaction density profile. A Price Range parameter 34 shows the range for the price on the price axis. A Price Interval parameter 36 enables the trader to set the price interval (i.e., scale) on the price axis of the satisfaction density profile. For example, as shown in Fig. 4, the center price is set at 48 and the price range at 6. Thus, the price axis will vary from a price of 45 to a price of 51 (with 48 being in the center) in price increments of one quarter. A Price parameter 37 can be used to set whether the price is absolute or relative (e.g., pegged to the bid/ask midpoint or to the average price of the last match of that security).

A Min Size parameter 38 and a Max Size parameter 40 allows the trader to set the minimum and maximum limits for the quantity axis of the satisfaction density profile.

Mismatches of grid resolution (e.g., due to different traders using different settings) is handled by interpolation to a common grid resolution. For example, the CMC 2 could determine the smallest grid resolution used and interpolate all coarser grid resolutions to that resolution. Alternatively, the CMC 2 could specify a minimum resolution (e.g. 100 shares and 1/8 in price) and interpolate all coarser grid resolutions to the specified minimum resolution.

A Cursor Position segment 42 will display the coordinates (price, size) of the position of the cursor as the cursor is moved by the user over the satisfaction density profile being created. A Cursor Type section 44 has a number of buttons to control the function of the cursor, for example, a set button, a more button, a less button, a boundary button, and an edit button. The more and less buttons allow the user to increase or decrease the satisfaction density level on the satisfaction density profile at the location of the cursor. In the representative embodiment, the selected satisfaction density value is increased or deceased each time the mouse button is "clicked." The boundary button allows the user to create a boundary, as discussed above at Fig. 2. The edit button allows the user to edit the boundary. The set button allows the user to set a satisfaction density value, so that each time the mouse is "clicked", the set value is placed in the satisfaction density profile at the location of the cursor.

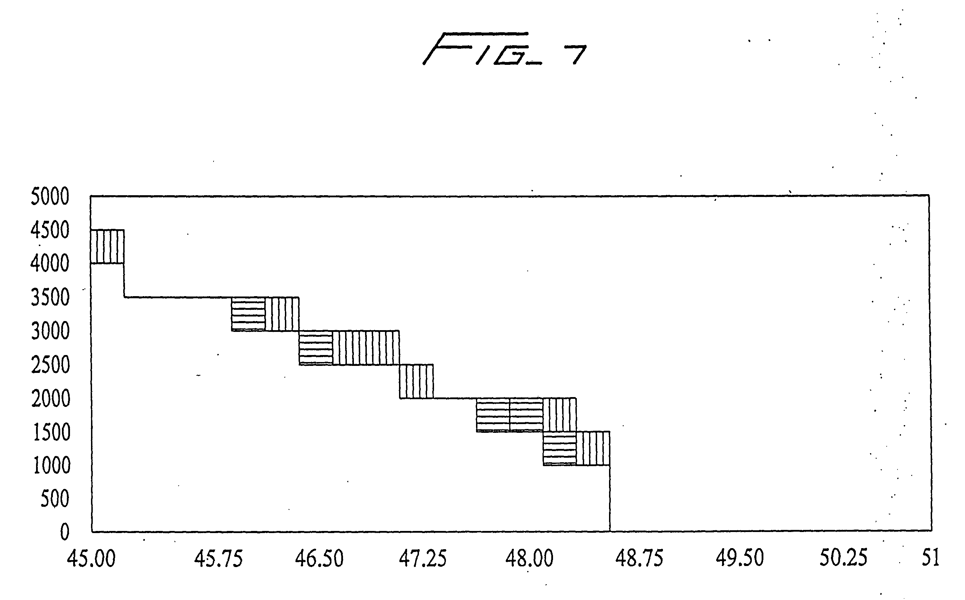

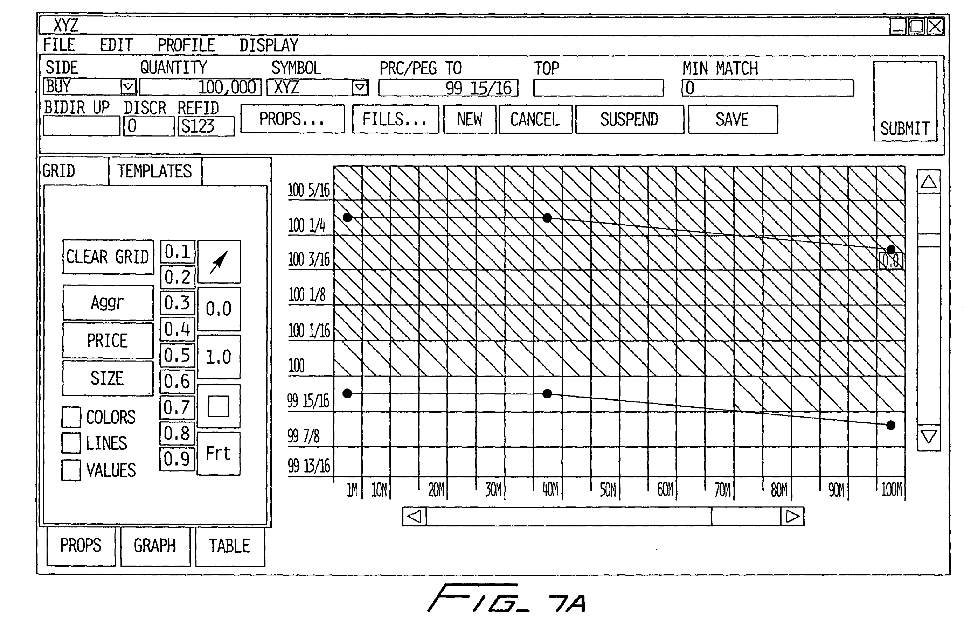

In the representative embodiment, there is a Display section 46 that has two buttons, namely, an Update button and a Display Surface button. The Update Button will redraw the satisfaction density profile. The Display Surface button will allow the user to change the way the satisfaction density profile is displayed, e.g., as a contour plot (as shown in Fig. 2) or a temperature graph (as shown in Fig. 7 below). The interface window 21 can also have a quit button 50, a clear button 52, a reset button 54 and an apply button 56. The quit button 50 enables a user to exit from the program that controls the interface window 21. The clear button 52 clears the display of the graph (e.g., the display of the satisfaction density profile) and all other parameter values, such as, for example, the Min Size parameter 38 and the Max Size parameter 40. The reset button 54 "undeletes" the most recent change to the graph, resetting the state of the graph to the immediately preceding state. The apply button 56, when selected, causes the satisfaction density profile to be submitted for matching. A remove boundary button 59, when selected, will remove all boundaries from the satisfaction density profile.

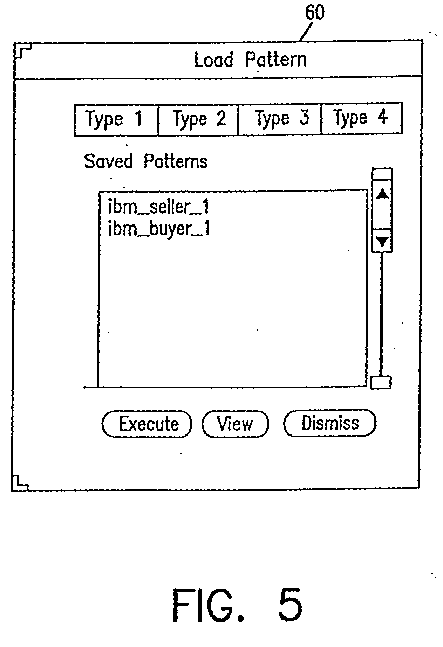

A patterns button 58 allows a user to retrieve pre-defined or user-defined parameterized templates for common types of satisfaction density profiles. Upon selection of the patterns button 58, a load pattern window 60 (as shown in Fig. 5) will be displayed, that allows the user to select saved patterns. In the example of Fig. 5, there are two saved patterns, namely ibm_seller_1 and ibm_buyer_1, that store patterns that enable a user to quickly load and use satisfaction density profiles to buy and sell IBM stock.

Certain common order types (e.g., market-maker quotes, limit orders, agency orders) can be expressed as parameterized templates that could be selected directly using the Patterns button 58 and the Load Pattern window 60.

Fig. 5A illustrates an example of a template with which a user can select specific types of orders, such as, for example, an aggressive sell order, a limit sell order, a not held sell order, a sell order with minimum size, and scaled up sell order and an all or none sell order. Once the corresponding template pops up on the display, the user could morph the display to suit the user's preferences as will be described hereinbelow.

An even more elegant approach is to use a family of templates that represent two-dimensional basis functions for the surface profile. These functions can be selected from any of the standard two-dimensional orthogonal basis sets (e.g., Fourier, Cosine, Walsh-Hadamard, Haar transforms) or from more generalized and/or data specific basis functions such as those associated with the Gabor and other wavelet transforms or the Karhunen-Loeve transform. Analogous to their role in image data compression, the use of such functions as templates in this application would provide a substantially lower dimensional representation of the buy/sell surface profile, which in turn will correspondingly reduce the dimensionality of the coupling matrices needed to link together the profiles of multiple securities.

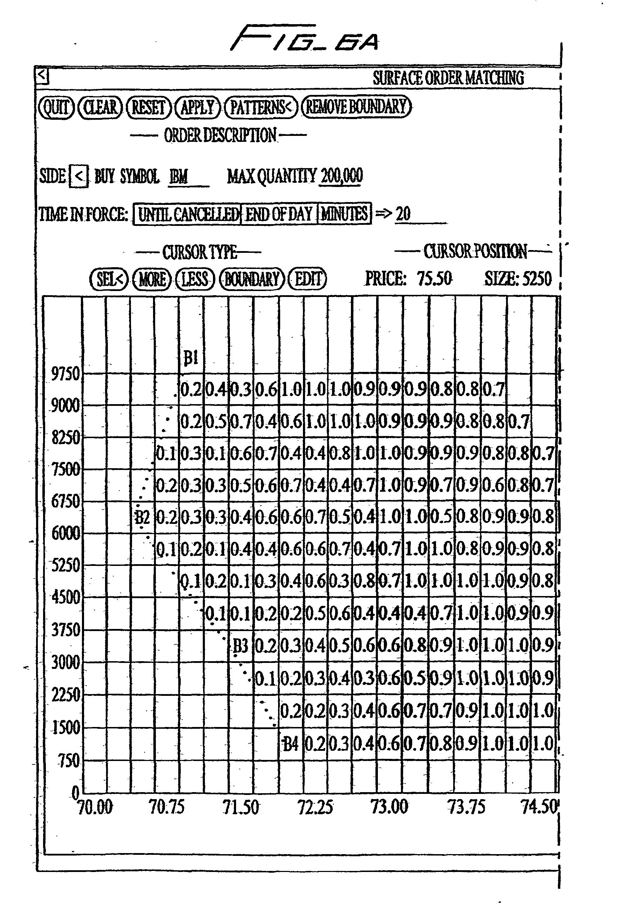

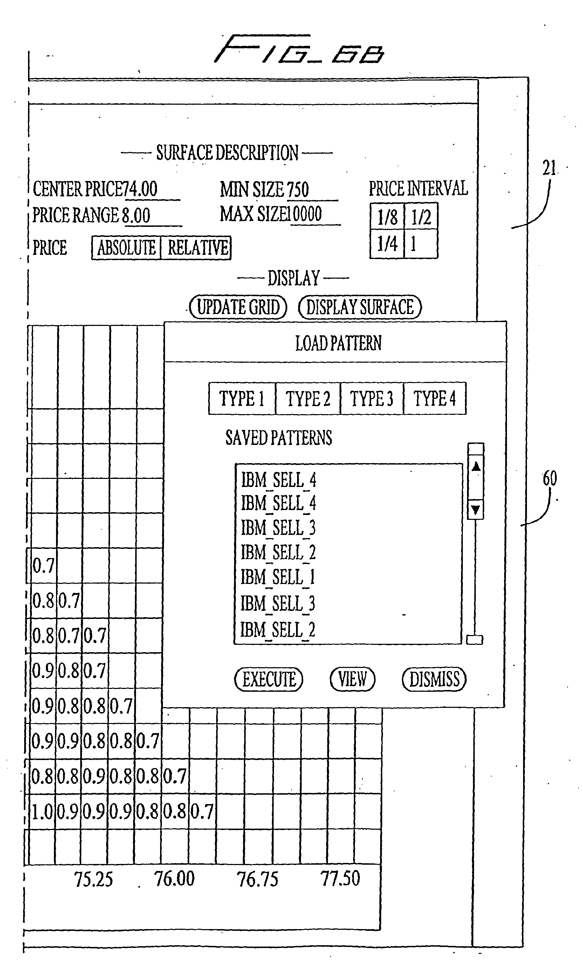

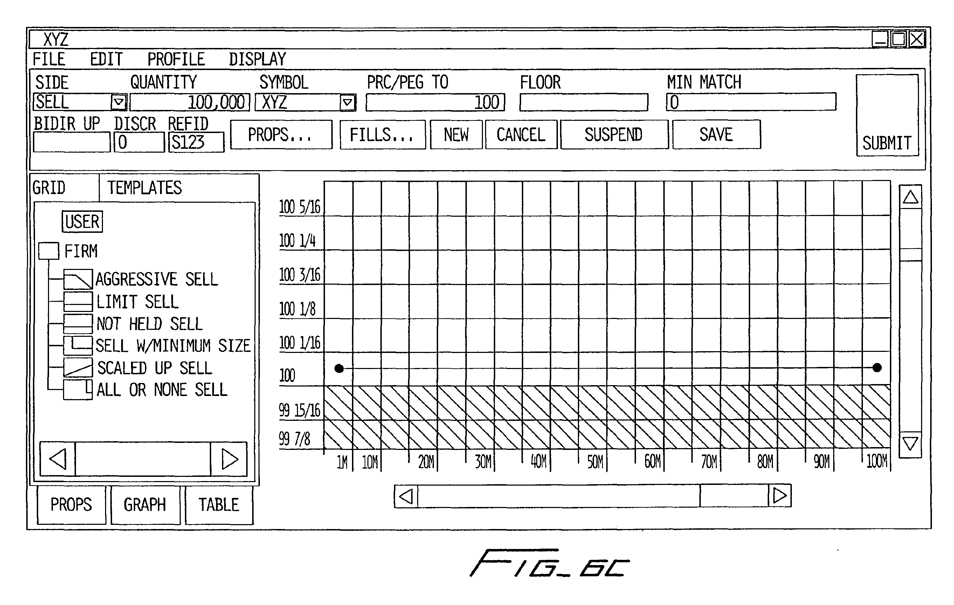

Figs. 6A-6B show a full screen display (which has been broken in half for ease of illustration) that includes an interface window 21 and the satisfaction density profile of Fig. 2. As will be appreciated, the entry of buy/sell profiles can be facilitated by a combination of a user-friendly graphical interface and user-tailorable templates. Those illustrated above are merely examples of the types of interfaces that could be used to enter satisfaction density values. In an alternative embodiment, the GUI would provide a set of tools for quickly entering buy/sell profile "peg point" values at selected price/size grid coordinates, along with an arbitrarily drawn boundary outside of which the profile values would be set to zero at all grid points. The CMC 2 would then calculate a two-dimensional (or multi-dimensional) profile that exactly matches the specified points and interpolates between these values to compute all other grid values. This interpolation can be accomplished by a number of mathematical algorithms, including but not limited to triangular tessellations, spline functions, and surface and/or contour plotting programs. The GUI would also include the ability to "morph" a surface profile created in this manner, using mouse hook-and-drag type operations or other similar methods, so that the profile can be altered by the user as desired to achieve a final configuration.

Fig. 7 shows a buy satisfaction density profile displayed as a temperature graph. The user can cause any satisfaction density profile that has been inputted as a contour plot (or other representation) to be displayed in the form of a temperature graph by selecting the Display Surface button. In the representative embodiment, each (price, quantity) coordinate is represented by a colored square (e.g., 80), with the color of the square signifying the satisfaction density value. For example, in the representative embodiment, a satisfaction density value of 0 is represented by a black square, a satisfaction density value of 1 is represented by a white square, a satisfaction density value of 0.1 is represented by a blue square, a satisfaction density value of 0.2 is represented by a red square, a satisfaction density value of 0.9 is represented by a yellow square, and so on. Using this display, the trader can view the satisfaction density profile as a meaningful and colorful graphical display.

As shown in Figs. 2, 2A, 3A-3D, 6A-6B, 6C, 7 and 7A, there are many ways and forms for creating and representing a satisfaction density profile on a computer interface and for inputting satisfaction density values in accordance with the subject invention.

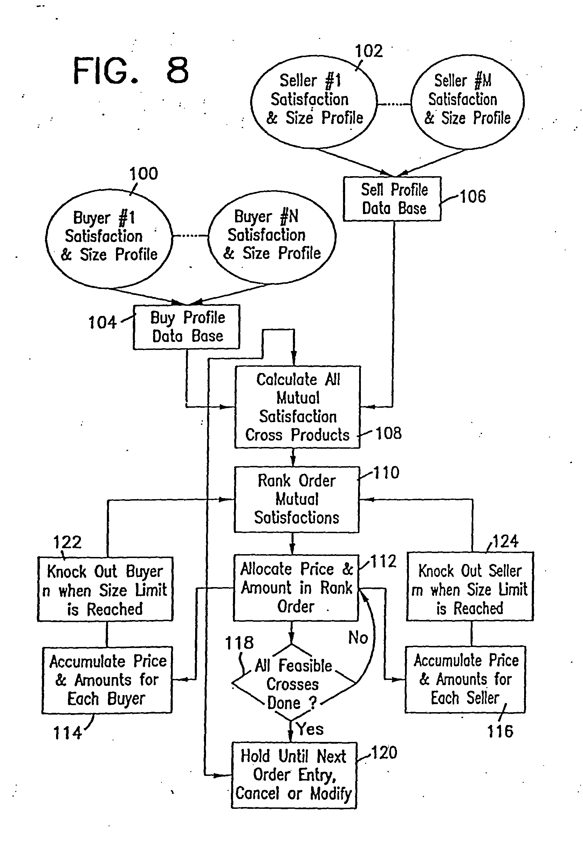

Fig. 8 is a flow chart representing the overall steps performed in accordance with the present invention. Traders enter satisfaction density profiles, as discussed above, at steps 100 and 102. It will be appreciated that many traders can each enter one or more satisfaction density profiles. For convenience, Fig. 8 shows that the buy and sell profiles are entered at different steps (i.e., steps 100 and 102); however, the same interface (e.g., interface window 21) and terminals 10, 12, 14 are used for the input of both buy and sell profiles. In fact, steps 100 and 102 could conceptually be considered to be the same step, merely with differing data.

In the representative embodiment of the present invention, buy satisfaction density profiles, when ready for matching, are transmitted to the CMC 2 and stored in a buy profile database 6 (step 104). Sell satisfaction density profiles, when ready for matching, are transmitted to the CMC 2 and stored in a sell profile database 8 (step 106).

At step 108, the CMC 2 calculates, for each possible buy/sell combination stored in the buy profile database 6 and sell profile database 8, a mutual satisfaction function, which, in the representative embodiment, is a mutual satisfaction cross product. The mutual satisfaction cross product represents the potential for that buy/sell pair mutually to satisfy each side. By way of example, if there are three buy profiles (A, B, C) and two sell profiles (1, 2), the CMC 2 will calculate six mutual satisfaction cross products, e.g. A1, A2, B1, B2, C1, C2.

At step 110, the CMC 2 ranks each grid element (possible buy/sell pair at a corresponding price and size) of each mutual satisfaction cross product in order from largest to smallest. The buy/sell pairs are then matched in the ranked order (step 112), accumulating the price and size for the buyer and seller of each matched transaction (steps 114 and 116). When the size limit for a particular satisfaction density profile is reached, all remaining lower ranked grid elements involving that profile are removed from consideration (steps 122 and 124). If all feasible (i.e., non-zero mutual satisfaction) crosses have not been done (step 118), then control returns to step 112. If all feasible crosses have been completed, then the process is temporarily suspended until the next order is entered or an existing unmatched order is canceled or modified (step 120), upon which control returns to step 108. To operate the present invention as a continuous crossing network, control should return to step 108 whenever a new order is entered or an existing order canceled or modified.

Certain aspects of Fig. 8 can be described more precisely in mathematical notation, as follows. This explanation will begin with a batch process description, and then show how this extends directly to a continuous crossing strategy. Assume we have M buyers and N sellers in a crossing pool for a given stock. We define $B_i(p,s)$ as the "satisfaction density" of the i-th buyer for receiving a portion, s, of his fill at price p, where $0 \leq B_i(p,s) \leq 1$. Along with this profile, the buyer will have a maximum size limit $\beta_i$. Let $S_k(p,s)$ and $\sigma_k$ be the corresponding satisfaction density and size limit for the k-th seller. These satisfaction density profiles are two-dimensional surfaces over a grid of price and size coordinates that characterize the participant's degree of satisfaction in the transaction. A value of zero in any coordinate cell indicates no satisfaction (i.e., no desire for any portion of the transaction to be accomplished at the corresponding cell price), while a value of unity indicates full satisfaction. In-between values correspond to limited degrees of satisfaction. Mathematically, these values represent "fuzzy" variables that characterize the degree of membership of a particular price/size transaction in the set of satisfying transactions.

Certain characteristics of the satisfaction density functions can be derived from obvious constraints. For a given value of size, we have:

$B_i(p_1,s) \geq B_i(p_2,s)$ if $p_1 < p_2$ (i.e., buyers prefer lower prices),
$B_i(p,s) \uparrow 1$ as $p \downarrow 0$ (full satisfaction as price goes to zero),
$B_i(p,s) \downarrow 0$ as $p \uparrow \infty$ (no satisfaction as price goes to infinity), and similarly,
$S_k(p_1,s) \geq S_k(p_2,s)$ if $p_1 > p_2$ (i.e., sellers prefer higher prices),
$S_k(p,s) \uparrow 1$ as $p \uparrow \infty$ (full satisfaction as price goes to infinity),
$S_k(p,s) \downarrow 0$ as $p \downarrow 0$ (no satisfaction as price goes to zero).

For a given price p, there is no similar set of ordinal relationships with respect to size. However, there are special cases that typically would arise in trading. For example, the satisfaction density of a a marketmaker at a given price p might be constant for sizes from zero up to 1,000 shares, and then decline rapidly to zero for larger sizes. The satisfaction density of an agency broker might be non-zero only for sizes up to the client's order size. The satisfaction density of an accumulating or divesting investor might exhibit a broad hump in size centered at some large value.

We define the mutual satisfaction density between the i-th buyer and the k-th seller to be

$$J_{ik}(p,s) = B_i(p,s)\, S_k(p,s), \quad i=1, ..., M; \ k=1, ..., N.$$

This product lies between zero and unity in value, and provides a measure of the relative degree to which a given price and size satisfy a particular pair of buyer and seller. There will be MN such mutual satisfaction densities for all participants in the batch.

Numerous other alternatives for defining these mutual satisfaction densities are available. For example, an alternative definition could be

$$J_{ik}(p,s) = \min \{B_i(p,s), S_k(p,s)\}$$

It will be apparent that other definitions are possible that accomplish the same objective of characterizing the degree of mutual satisfaction.

The optimization problem is: what allocation of amounts and prices

$$(p_{ik}, a_{ik}) \quad i=1 \ ... \ M; \ j=1 \ ... \ N$$

between the i-th buyer and the k-th seller results in the maximum joint mutual satisfaction over all participants? This is equivalent to maximizing

$$J = \sum_{i=1}^{M} \sum_{k=1}^{N} J_{ik}(p,s)$$

subject to the size constraints

$$\sum_{k=1}^{N} s_{ik} \leq \beta_i,$$

$$\sum_{i=1}^{M} s_{ik} \leq \sigma_k.$$

This maximization can be performed as follows:

1. At each price/size value in the grid, compute the MN values of $J_{ik}(p,s)$.
2. Over all price/size grid values, rank the $J_{ik}(p,s)$ from largest to smallest, saving the index values corresponding to both the buyer/seller pair and the grid coordinates.
3. Allocate price and size, starting with the highest ranked $J_{ik}(p,s)$, and accumulate the amounts for each buyer/seller. When a size limit is reached, knock out of the ranked list any remaining entries for that buyer/seller.

Any ties in the ranking process could be arbitrated by random drawing in step three, in order to be fair to all participants. Alternatively, where there is a tie, the CMC 2 could select the match that would result in the greatest overall mutual satisfaction over all possible securities being accomplished. For example, the CMC 2 could "look ahead" and determine whether any other possible matches depend upon one of the tied possible matches occurring.

The CMC 2 can then aggregate all allocations between each pair of buyer and seller to compute a single size and price for their transaction as follows:

$$s_{ik} = \sum_{m} \sum_{n} s_{ik}(m,n)$$

(total size, where (m,n) are grid point coordinates corresponding to non-zero mutual satisfactions)

$$P_{ik} = \frac{\sum_{m,n} p_{ik}(m,n)\, s_{ik}(m,n)}{s_{ik}} \quad \text{(average price)}.$$

Numerous variations on this theme are possible. For example, in a representative embodiment, the present invention may allow a minimum threshold of mutual satisfaction in the ranking process, below which no allocations are made. Furthermore, the satisfaction density for one stock can be made a function of the allocations already made in another stock.

To convert the batch process into a continuous one, each new satisfaction density entered into the crossing network of the present invention is treated as an event that triggers a new round of computation as described above. While the computation requirements to implement this process in real time for all stocks are significant, they are well within the capability of modern supercomputers.

The following is a simple example to illustrate the operation of the present invention. This example assumes that there are two buy profiles and two sell profiles entered by traders into the system for the trade of a single stock. The four satisfaction density profiles can be represented as the following matrices, with price being rows and quantity being columns:

| Buyer #1 Profile | B1 := | 0.0 | 0.0 | 0.0 | 0.0 |
|---|---|---|---|---|---|
| | | 0.1 | 0.0 | 0.0 | 0.0 |

(continued)

| | | 0.8 | 0.7 | 0.3 | 0.1 |
|---|---|---|---|---|---|
| | | 1.0 | 0.8 | 0.4 | 0.2 |
| Buyer #2 Profile | B2: = | 0.1 | 0.1 | 0.1 | 0.0 |
| | | 0.3 | 0.3 | 0.3 | 0.0 |
| | | 0.5 | 0.5 | 0.5 | 0.0 |
| | | 1.0 | 1.0 | 1.0 | 0.0 |
| Seller#1 Profile | S1: = | 1.0 | 1.0 | 1.0 | 1.0 |
| | | 0.7 | 0.7 | 0.7 | 0.7 |
| | | 0.2 | 0.2 | 0.2 | 0.2 |
| | | 0.0 | 0.0 | 0.0 | 0.0 |
| Seller #2 Profile | S2 : = | 0.0 | 0.0 | 0.0 | 0.5 |
| | | 0.0 | 0.0 | 0.0 | 0.7 |
| | | 0.0 | 0.0 | 0.0 | 0.3 |
| | | 0.0 | 0.0 | 0.0 | 0.1 |

Buyer #1 Profile is represented graphically as a contour plot in Fig. 3A. Buyer #2 Profile is represented graphically as a contour plot in Fig. 3D. Seller #1 Profile is represented graphically as a contour plot in Fig. 3C. Seller #2 Profile is represented graphically as a contour plot in Fig. 3B.

Then the four mutual satisfaction cross products produced at step 108 are as follows:

| J11 := (B1 · S1) | | | | |
|---|---|---|---|---|
| J11 therefore equals | 0.00 | 0.00 | 0.00 | 0.00 |
| | 0.07 | 0.00 | 0.00 | 0.00 |
| | 0.16 | 0.14 | 0.06 | 0.02 |
| | 0.00 | 0.00 | 0.00 | 0.00 |
| J12:=(B1·S2) | | | | |
| J12 therefore equals | 0.00 | 0.00 | 0.00 | 0.00 |
| | 0.00 | 0.00 | 0.00 | 0.00 |
| | 0.00 | 0.00 | 0.00 | 0.03 |
| | 0.00 | 0.00 | 0.00 | 0.02 |
| J21:= (B2·S1) | | | | |
| J21 therefore equals | 0.10 | 0.10 | 0.10 | 0.00 |
| | 0.21 | 0.21 | 0.21 | 0.00 |
| | 0.10 | 0.10 | 0.10 | 0.00 |
| | 0.00 | 0.00 | 0.00 | 0.00 |
| J22:= (B2 · S2) | | | | |
| J22 therefore equals | 0.00 | 0.00 | 0.00 | 0.00 |
| | 0.00 | 0.00 | 0.00 | 0.00 |
| | 0.00 | 0.00 | 0.00 | 0.00 |
| | 0.00 | 0.00 | 0.00 | 0.00 |

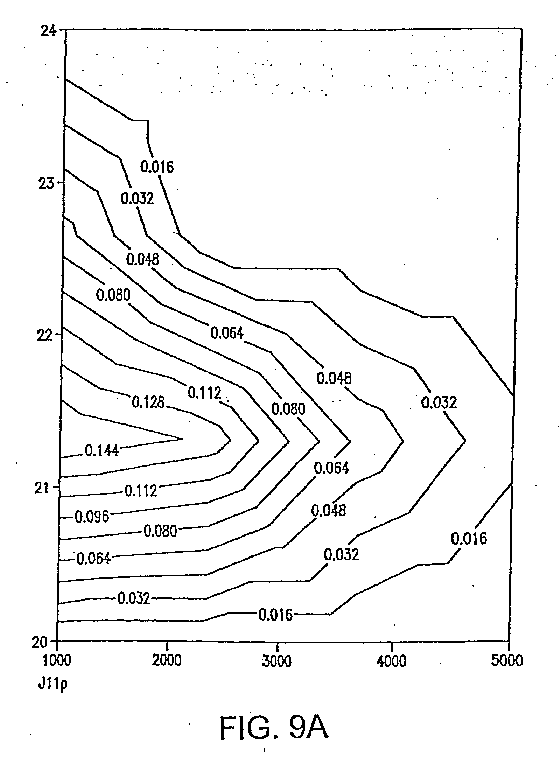

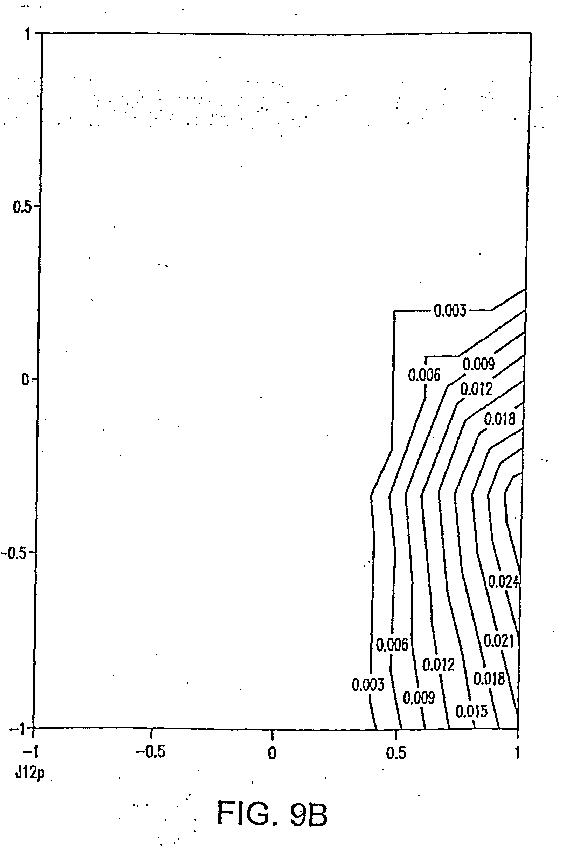

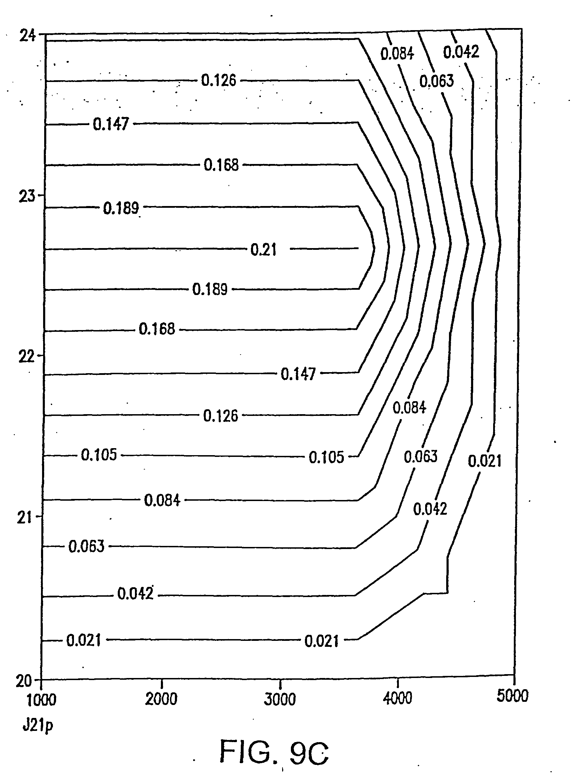

J11 is represented graphically, as a contour plot, in Fig. 9A. J12 is represented graphically, as a contour plot, in Fig. 9B. J21 is represented graphically, as a contour plot, in Fig. 9C. J22 is represented graphically as a blank contour plot (not illustrated).

Ranking each (price, quantity) pair from the above four grids gives the following vector: w = (.21, .21, .21, .16, .14, .1, .1, .1, .1, .1, .1, .07, .06, .03, .02, .02, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0, 0)

If there are a number of possible trades ranked equally (e.g., there are three possible trades ranked first above), then one is chosen at random or, as explained above, according to a predetermined scheme to increase overall mutual satisfaction in the matching process.

In further embodiments, additional variables (or parameters) can be included that have an effect on the satisfaction density profile. For example, an eligibility variable or an urgency variable (or both) could be set by the trader.

To account for these constraints and relationships, the satisfaction density profile of the present invention can be augmented to include two other variables: eligibility and urgency. In the most general case, each of these variables can take on a value between and including zero and one. Alternatively, each could have a binary value, zero or one. In one embodiment, the eligibility variable has a binary value and the urgency variable has a value between and including zero and one.

Both the urgency variable and the eligibility variable can be associated with the satisfaction density profile as a whole (e.g., one value per variable per profile) or each coordinate of the satisfaction density profile (e.g., one value for each (price, size) coordinate.)

The eligibility value, when associated with each coordinate, represents the degree to which that grid point is eligible for matching. In the simplest case, the eligibility variable is a binary variable that is used to track execution status, i.e., all values of the eligibility variable are assigned a value of one at order profile entry, and matched values are set to zero upon matching. Thus, in this embodiment, the eligibility variable could keep track of when matches have occurred. In a more general case, the eligibility of unmatched values could be held to zero pending satisfaction of execution status constraints of other securities (e.g., as in scenario A. above). Thus, the eligibility variable could be used as a coupling between two different stocks.

In a most general case, the eligibility variable could be a "fuzzy" variable, having values between and including zero and one, that would allow for "soft" (i.e., continuous-valued) constraints such as "I want to sell [some | a good amount | a lot] of IBM before I buy [ some | much | a large amount ] of DEC.

The urgency variable represents the degree to which a particular grid point satisfaction value should be either (a) translated in the direction of a more aggressive price, or (b) warped to a more aggressive satisfaction value, or both. In the representative embodiment, there is one urgency value per satisfaction density profile (i.e., urgency is condensed to a single scalar value for each security, applied uniformly), and the value of the urgency variable ranges from zero to one. In the normal case, the urgency variable would have a value of zero, representing regular trading urgency. Non-zero values of the urgency variable would signify the degree of urgency, with one being the most urgent.

For case (a) immediately above, a non-zero value of the urgency variable would translate the whole satisfaction density profile up in price (for a buy) or down in price (for a sell). In this instance, the boundaries of the satisfaction density profile would shift accordingly.

In case (b), non-zero values of the urgency variable would exponentially warp the satisfaction density values. Assume that the urgency variable is assigned a value u. Then each (non-zero) satisfaction density value is raised to the power (1-u). In this case, the boundaries of the satisfaction density profile are not changed.

Exemplary Embodiment of the Invention

The following provides a detailed description of an exemplary embodiment of the above-described matching system and method, including general protocols associated with preference profiles, and the detailed algorithmic process by which contra profiles are matched. The latter description may include priority rules, matching constraints, and the handling of special cases such as ITS (Intermarket Trading System) trades and short sales.

Preference Profile Protocols

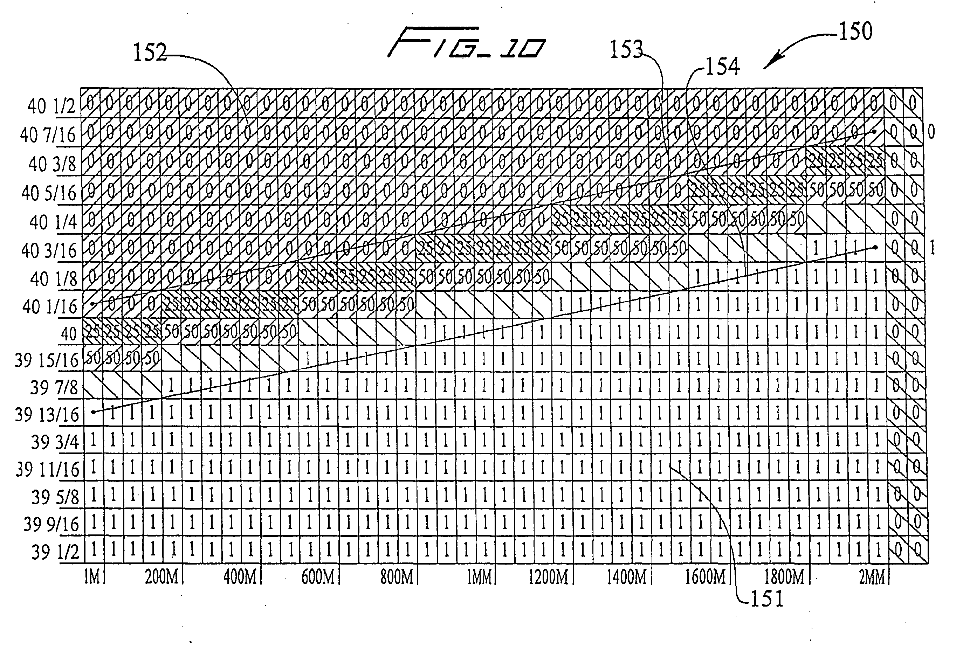

The basic user input to the crossing network is a preference or satisfaction density profile, which expresses the trader's degree of preference (a number between zero and one) to trade at each price/size coordinate in a given cycle. Any coordinate with a non-zero preference value is eligible to be matched one or more times at its corresponding size with one or more contra profiles, at its corresponding price or better, during that cycle, subject to the algorithmic process and constraints to be described below. Fig. 10 depicts an exemplary embodiment of a preference profile 150 (in this case, a buy profile) in the graphical user interface (GUI) used in this exemplary embodiment of the present invention. The white region 151 denotes '1' preference values, while the shaded region (between contour lines 153 and 154) denotes intermediate preference values between '0' and '1'. The black region 152 indicates zero preference values (i.e., prohibited trades).

Profile Features and Parameters

The actual grid over which preference profiles are defined is quantized in price (vertical axis) by the minimum trading increment in the corresponding security being traded. It is quantized in size (horizontal axis) to 1000 share increments. In the latter case, it is important to note the difference between the quantization of preference (which represents the granularity of expressing trading preference as a function of size) versus the unit of trading size in the system, which may be in round lots (100 shares). Any integer number of round lots can be traded, but the same preference value at a given price applies to each round lot size between, e.g., 1100 and 2000 shares, or between 7100 and 8000 shares.

Every preference profile has an associated maximum quantity of shares (in round lot multiples) to be bought or sold. This quantity must be greater than or equal to 1000 shares, except for profiles that originate from the exchange's specialist's workstations or from the exchange's order book, which may be in any round lot quantity down to 100 shares, or from CQS (Consolidated Quote System) quotes, which may be in any round lot quantity greater than 100 shares. CQS quotes of 100 shares are ignored.

Specification of Preference Profiles

In accordance with an embodiment of the subject invention, satisfaction density profiles, also known as preference profiles, are entered via the specification of preference contours, which are adequate to describe any practical preference profile. The user can specify individual preference contours, corresponding to preference values from the set [0.0, 0.1,... 1.0], manually via the GUI, or eventually by computer using an extension of the Financial Information Exchange (FIX) standard messaging format. Each contour is specified in terms of its vertices (i.e., end points or bend points in the contour), which correspond to discrete preference coordinates in the specified price and size increments. The profile in Fig. 10 is entirely defined by the two preference contours shown, each of which is specified by only two vertices.

As described below, contours are expanded into piecewise continuous line segments, each corresponding to a single specified preference value. Every profile must specify a '1' preference contour, and this '1' contour must be specified over the entire size range of non-zero preference values in the profile. If a profile does not specify a '0' contour, it will be automatically created by the matching engine. The zero contour will be inserted across all profile sizes at a price that is one tick more aggressive than the most aggressive coordinate specified with a non-zero preference.

The full matrix of preference values is constructed from the specified preference contour vertices in two stages. The first stage linearly interpolates between adjacent vertices to create piecewise linear preference contours lying on the grid of price/size coordinates. At each discrete size increment, the corresponding preference value is assigned to the intersecting grid coordinate whose price is closest to the interpolated contour line. This process is performed in decreasing order of contour preference values, so that lower-preference contours that intersect the same grid coordinate as a higher-preference contour overwrite previously assigned preference values. The result is a vertically stacked set of grid coordinates for each size increment whose prices correspond to specified discrete preference values.

For each of these size increments, the second stage linearly interpolates the preference values over price increments lying between the prices corresponding to the discrete preference values assigned in the first stage, assigning floating point preference values to these coordinates. For buy (sell) profiles, all coordinates at a given size whose price is below (above) the coordinate assigned a '1' preference in the first stage are automatically assigned a '1' preference. Similarly, for buy (sell) profiles, all coordinates at a given size whose price is above (below) the minimum specified contour preference value in the first stage are assigned a zero preference value. In this manner, the entire preference matrix for a given profile is specified as a function of the preference contours.

To illustrate this process, assume the following contour vertices have been entered to create a preference profile:

'1' preference contour vertices: (1000, $126.375), (65000, $125.750)

'0' preference contour vertices: (1000, $126.625), (65000, $125.875)

Profile price increment = $0.125

The first step is to linearly interpolate the prices between the defined contour vertices for each 1000 share size increment, followed by rounding of the resultant prices to the nearest price increment. This results in the following tables for the '1' and '0' preference contours, respectively:

## '1' Preference Contour Table

| Size coordinate | Interpolated price | Price delta | Price delta/0.125 | Rounded price |
|---|---|---|---|---|
| 1000 | 126.375 | 0.000 | 0.000 | 126.375 |
| 2000 | 126.365 | 0.010 | 0.080 | 126.375 |
| 3000 | 126.355 | 0.020 | 0.160 | 126.375 |
| 4000 | 126.346 | 0.029 | 0.232 | 126.375 |
| 5000 | 126.336 | 0.039 | 0.312 | 126.375 |
| 6000 | 126.326 | 0.049 | 0.392 | 126.375 |
| 7000 | 126.316 | 0.059 | 0.472 | 126.375 |

## '0' Preference Contour Table

| Size coordinate | Interpolated price | Price delta | Price delta/0.125 | Rounded price |
|---|---|---|---|---|
| 1000 | 126.625 | 0.000 | 0.000 | 126.625 |
| 2000 | 126.613 | 0.012 | 0.096 | 126.625 |
| 3000 | 126.602 | 0.023 | 0.184 | 126.625 |
| 4000 | 126.590 | 0.035 | 0.280 | 126.625 |
| 5000 | 126.578 | 0.047 | 0.376 | 126.625 |
| 6000 | 126.566 | 0.059 | 0.472 | 126.625 |
| 7000 | 126.555 | 0.070 | 0.560 | 126.500 |

Note that the rounded price value for 7000 shares in the '0' contour has shifted to the next lower price increment because the linear interpolated value has shifted more than 0.5 of the price increment.

The next step is, for each size increment, to interpolate linearly the preference values at each price increment lying between those prices assigned to the corresponding preference contour values in the above tables. This operation fills in the intermediate preference values in the matrix, and for illustration, would result in the following table of interpolated preference values for the price increment $126.500:

| Size increment at $126.500 price increment | Preference value |
|---|---|
| 1000 | 0.50 |
| 2000 | 0.50 |
| 3000 | 0.50 |
| 4000 | 0.50 |

| 5000 | 0.50 |
|---|---|
| 6000 | 0.50 |
| 7000 | 0.00 |

Profile Range Limits

In this exemplary embodiment, the following profile range limitations are imposed by the system.

Exclusion of Profiles from a Match

The matching engine may exclude profiles specifying preference contours that are too aggressively priced relative to the National Best Bid or Offer (NBB or NBO) at the time of the call from a match. Since the determination of the NBBO is not made until the start time of the match, users are not given an indication of the rejection of the profile.
If a buy profile specifies any preference contour coordinate greater than 159 price ticks higher than the NBO, the profile is excluded from a match. For a 1/16 price increment, this means that a profile with a preference contour coordinate $10.00 or more above the NBO is excluded. Note that this includes the specification of points on the '0'-preference contour. Similarly, if a sell profile specifies a preference contour coordinate more than 159 ticks lower than the NBB, it is excluded from a match.
In addition to these aggressively priced cases, buy (sell) profiles specifying preference contour coordinates that are much lower (higher) than the NBB (NBO) are also excluded from a match. If a buy profile specifies any preference coordinate more than 799 price ticks below the NBB (i.e., more than $50.00 below the NBB) it will be rejected. Similarly, if a sell profile specifies a preference coordinate more than 799 price ticks above the NBO (i.e., more than $50.00 above the NBO), it will be rejected. Profiles that are rejected in these tests remain in the system with their original time stamps, so they may participate in future call cycles if the NBB or NBO changes so as to make them eligible for trading.
Finally, any profile whose maximum quantity is more than 20 times the maximum size of any non-zero preference coordinate in that profile will be excluded from all matches. For example, a profile whose maximum size coordinate is 5,000 shares, but whose maximum quantity is 101,000 shares, will be excluded from all matches.

Truncation of Profiles Included in a Match

Aggressively priced buy or sell profiles that are not excluded from a match based on the above tests may still be truncated in price if they extend too far from the NBO or NBB, respectively. For buy profiles, all non-zero preference coordinates more than 100 price ticks (i.e., $6.25 for a 1/16 price increment) above the NBO are truncated from the profile. Similarly, for sell profiles, all non-zero preference coordinates more than 100 price ticks below the NBB are truncated from the profile. Thus any portion of a buy profile at prices more than 100 price ticks below the NBB is ineligible to trade, as is any portion of a sell profile at prices more than 100 price ticks above the NBO, since there will be no contra side profile coordinates extending beyond these limits.

Pegging of Profiles

Users may wish to update their profiles automatically in the system as market prices and quotes change throughout the day. This can be accomplished to a limited degree by using the pegging feature of the user interface, which allows profiles to be specified with respect to a reference price instead of an absolute price.

The pegging reference price options available through the system user interface are: National best bid price; National best offer price; midpoint between the national best bid and best offer prices.

If pegging is invoked in the creation or modification of a profile, the prices displayed on the vertical axis of the profile are shown relative to the selected pegging price variable. All contours in a pegged profile, and their corresponding preference specifications, are updated with respect to the appropriate pegging price at the beginning of each system matching cycle. Pegged profiles always receive a new time stamp at the beginning of each cycle, which puts them lower in time priority than any non-pegged profile. However, the relative time priorities among the subset of pegged profiles are preserved in accordance with their original time stamps, so that earlier submitted pegged profiles have time priority over later submitted ones.

Market Data Filtering for Pegged Profiles

The market data is filtered to determine the pegging reference prices in a manner to reduce the likelihood of an unintended outcome from a match.

The following algorithm is used to determine the pegging reference price used by the system for each equity traded:

1. National market prices are taken directly from the SIAC market data feed. The consolidated bids and offers of the national market are checked to determine if they result in a locked or crossed market condition. If not, the national best bid and best offer (NBBO) is calculated, and the algorithm then proceeds to step 4.

2. If a locked or crossed market condition is detected, the bids and offers are censored one at a time in reverse chronological order of their update times (i.e., the most recently updated bid/offer is censored first), until the remaining set of bids and offers is not locked or crossed. If the bid and offer from a single exchange are crossed then both quotes will be ignored for that exchange. If there is neither a bid nor offer from the primary exchange the cycle will be cancelled. If a crossed market is detected from different exchanges and the timestamps are equal then the offer will be ignored. If a quote has a size of 100 shares (1 round lot) or less it will be excluded from the cycle. If a quote is not flagged as 'firm' it will be excluded from the cycle. If a quote is flagged as 'fast market' it will be excluded from the cycle. Quotes from the following exchanges will be considered for the cycle: Boston, Chicago, Philadelphia, New York, Amex, Third Market and Cincinnati.

3. The remaining set of bids and offers is then used to calculate the NBBO. A final validation test is performed to eliminate best bid, best offer, or last sale values that have deviated more than a threshold amount from their last reference values. This threshold is proportional to the price and the square root of time since the last reference value. In the event that all bids are locked or crossed with respect to all offers, the match will not be executed. If either the NBB or the NBO (but not both) is missing or determined to be not valid, the match will be executed, but all pegged profiles except those pegged to the valid bid or offer will be excluded. If the last sale exceeds the threshold from its previous value, all profiles pegged against the last sale will be excluded from the cycle, but the tick direction will be taken "as-is".

4. The NBBO prices resulting from step 1 or step 3 are used as the pegging reference prices for profiles pegged to the best bid or best offer, respectively.

5. The midpoint price is calculated as the average of the best bid and best offer reference prices determined in step 3. If the midpoint price corresponds to a legitimate trading increment price, that price is used as the pegging reference price for profiles pegged to the midpoint of the national best bid and best offer. If not, buy profiles pegged to the midpoint will use the next lowest trading increment price below the midpoint price as the pegging reference price. Sell profiles pegged to the midpoint will use the next highest trading increment price above the midpoint price as the pegging reference price. Another option would be to round buy Profiles up to the next valid trading increment and round sell Profiles down to the next valid trading increment to ensure that buyers and sellers pegged to the midpoint overlap.

6. For profiles pegged to the national last sale price, if the national last sale price lies on or within the NBBO price range, it is used as the pegging reference price for both buy and sell profiles. If the national last sale price is greater than the best offer price calculated in step 1 or 3, the national best offer price is used as the pegging reference price for buy profiles, and the national last sale value is used as the pegging reference price for sell profiles. If the national last sale price is less than the best bid price calculated in step 1 or 3, the national best bid price is used as the pegging reference price for sell profiles, and the national last sale value is used as the pegging reference price for buy profiles.

The above market data filtering algorithm does not correct erroneous market data that may be used to determine pegging reference prices.

Matching Eligibility

Unless otherwise constrained, any individual coordinate of a preference profile is eligible for multiple matches against contra profiles each time a new system matching cycle is performed. There are four basic constraints that limit this eligibility:

1. A coordinate whose size, when added to the cumulative size of potential allocations already made to its profile, would exceed the maximum quantity for the profile is not eligible for further matching.

2. A user may enter an arbitrary number of explicit price or volume controls that restrict the total number of shares that may be allocated from a particular price or size region of the preference profile. For example, the user may specify that, notwithstanding the overall shape of the preference profile, no more than 100,000 shares may be accumulated at a price of 57 or higher, and no more than 50,000 shares may be accumulated at sizes of 10,000 shares or less. Explicit price and/or size controls are logically ANDed (i.e., each and every control must be satisfied by a prospective allocation), and they are neither reset nor adjusted from one matching cycle to the next. These boundary conditions provide a further degree of user control over the trade allocations that can be made to the profile, throughout its life. Note that pegged profiles are not permitted to have price controls.

3. A user may enter an Intermarket Trading System (ITS) restriction that limits the number of shares (as a percentage of the maximum quantity) in his profile that may be matched against the quotes of ITS participants.

4. For buy (sell) profiles with regions of downward (upward) slope, where the maximum coordinate size with non-zero preference at a particular price is less than the maximum coordinate size with non-zero preference at any price in the profile, the system automatically generates an "implicit price control". This price control limits the number of shares that can be allocated at that price or above (below) in a single match to the size of the maximum-size non-zero preference coordinate at that price. Implicit price controls, at each price where they are generated, are automatically reset and/or recomputed at the beginning of each matching cycle. Thus they do not prevent the accumulation of trades at a particular price across multiple matches whose total volume might otherwise be disallowed in a single match. As an illustration, note that in the last table of Section1.2, the largest size increment with non-zero preference value at the price $126.50 corresponds to a size of 6000 shares, and the total profile contains non-zero preference values corresponding to sizes greater than 6000 shares. Thus an implicit price control is generated that limits to 6000 shares the total trade volume that may be allocated in a single match at a price of$126.50 or higher.

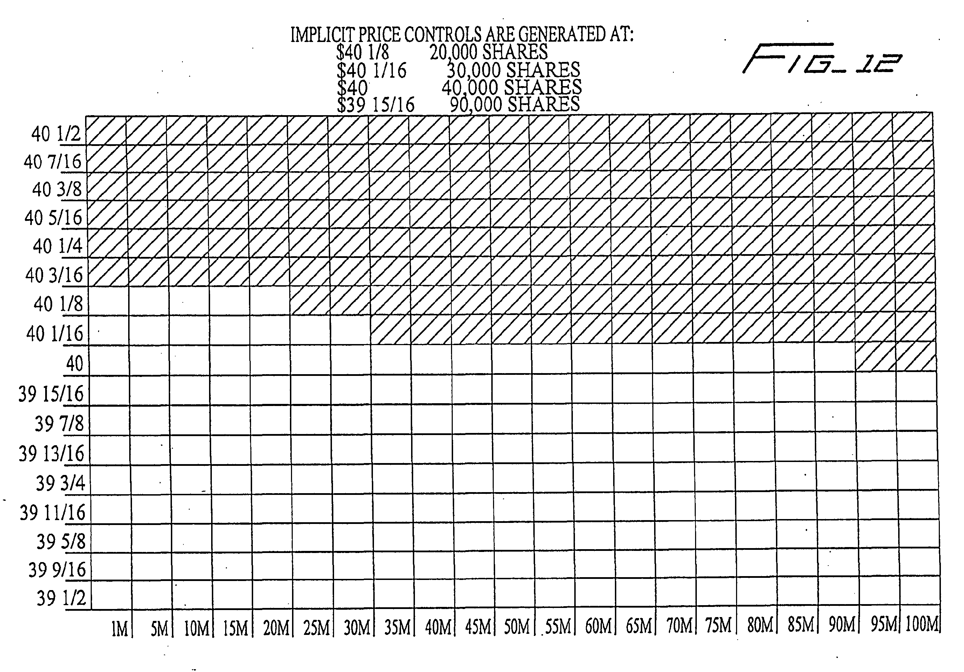

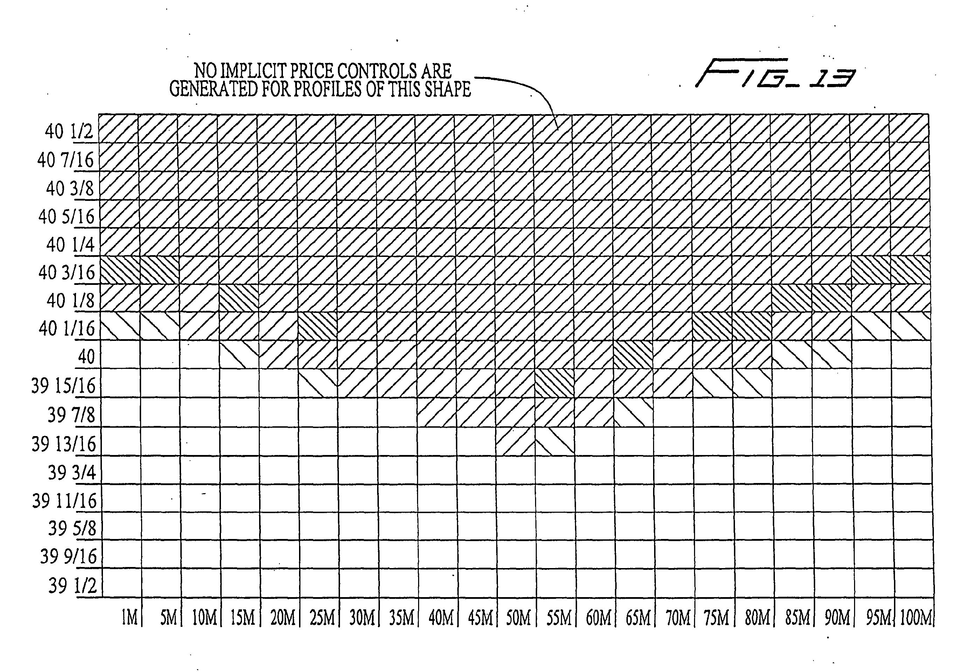

Fig. 11 illustrates the use of explicit price and volume controls in a profile, and Fig. 12 details the generation of implicit price controls. As illustrated in Fig.11, the explicit volume control (vertical line) limits total volume in trades of 300,000 shares or less to 400,000 shares, while the explicit price control (horizontal line) limits total volume at $39 15/16 and above to 510,000 shares. As illustrated in Fig. 12, the implicit price controls are generated at the following coordinates: $40 1/8 for 20,000 shares; $40 1/16 for 30,000 shares; $40 for 40,000 shares and $39 15/16 for 90,000 shares. Fig. 13 shows an example of a buy profile for which no implicit boundaries are generated, notwithstanding the downward slope region over a portion of the profile, since the maximum non-zero preference coordinate size at each price equals the maximum non-zero preference coordinate size at any price in the profile.

Users should note that the only carry-over information from one system matching cycle to the next, regarding trades already allocated to a profile, is with respect to the externally specified limits on the profile. These include maximum quantity, explicit price/size controls, ITS percentage restrictions, and profile type; all of which information is input by the user in fields outside the profile grid. The profile itself, at each new cycle, states preferences to trade in that cycle, subject to these external constraints on cumulative trade allocations. This is critically important for users who input buy profiles with downward sloping preference contours, or sell profiles with upward sloping preference contours. The implicit price controls generated as a result of this profile shape apply only to trade allocations in the current matching cycle, and take no account of trade allocations from previous cycles. Users are cautioned to use explicit price controls for such profiles to prevent trade allocations over multiple cycles that would violate the implicit price controls applicable in a single cycle.

Profile Priority Variables

Standing of a Profile Coordinate

In existing market centers, a regular-way limit order specifies a maximum size and a limit price against which one or more fills may be allocated, up to the maximum size and at or better than the limit price. Such orders have "standing" in the sense that no trade is permitted that would trade through the limit price of such an order without first filling the order. The key features of an order with standing are

1) it is a held order at the limit price or better; and 2) any portion of the order may be filled at the limit price or better.

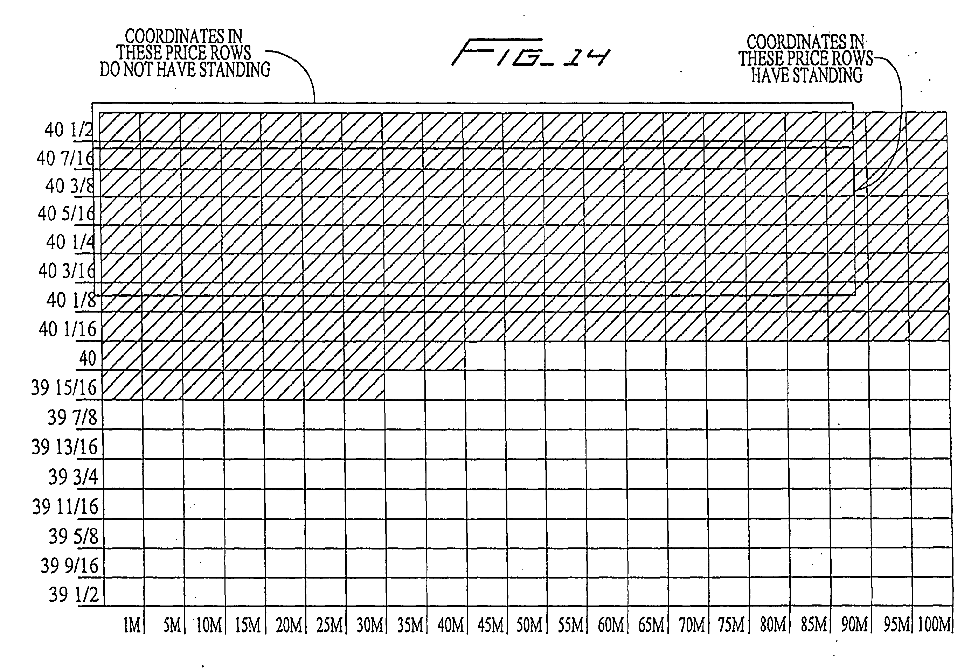

The analogous concept of a preference profile coordinate with standing is defined by the following features: 1) the coordinate must have '1' preference, 2) the coordinate must lie in a row of contiguous coordinates of '1' preference at the same price, extending down to the minimum (i.e., leftmost) size increment, all of which are eligible to be matched, and 3) the profile must not have its ITS participation set to less than 100%. A profile with standing can have ITS < 100% and a coordinate only loses standing if the ITS restriction blocks a trade from occurring. Thus if a coordinate has standing, it lies in a region of the preference profile that has '1' preference values for all coordinate sizes from the minimum preference increment (i.e., 1000 shares) up to and including the coordinate's size, at its corresponding price. Fig. 14 illustrates the concept of standing.

Referring to FIG. 14, the coordinates in the larger lower rectangle possess standing, while those in the smaller upper rectangle do not possess standing. In one embodiment of the system and method of the subject invention, no match is permitted that would trade through the price of a coordinate with standing, as described more fully below. No coordinate has standing in any profile that incorporates an (explicit) size boundary condition. In profiles with less than 100% ITS participation, coordinates that otherwise would have standing may be traded through if the profile has failed to make a prospective trade at an earlier point in a given cycle as a result of its ITS restriction. Otherwise, these coordinates are treated as though they possess full standing.

Class of a Profile

In general, there are four levels of profile class in the system, designated respectively in descending order of priority as Book, Agency, Principal or CQS (i.e., Consolidated Quote System). In addition, there may be instances wherein the system includes the profile class of Principal Exempt, and in other situations explained hereinbelow, there can also be profiles which fall within a Synthetic class.

Class Definitions

Each limit order and specialist quote residing in the host exchange computer system at the time of a match is converted to a limit profile with Book class. Each profile submitted via the system GUI must be identified by the user as either an Agency or Principal profile. The end user is responsible for properly identifying profiles as Agency or Principal.

The account type identification of electronically submitted limit orders to the system via the FIX protocol (either from a CTCI or a Gateway service provider) is specified using the Account Identification Codes (AIC) published by the New York Stock Exchange (NYSE). Each profile created by the system from such orders is designated as either an Agency or Principal profile, in accordance with the following classification table:

| CLASSIFICATION OF AIC CODES | |
| --- | --- |
| AGENCY CLASS | A, B, H, I, J, K, R, U, Y, Z |
| PRINCIPAL CLASS | C, D, E. F, L, M, N O, P, T, W, X |

AIC codes have no other impact on the system matching algorithm. Specifically:

1. All orders identified as Sell Short Exempt are treated as sell orders.
2. Where the host exchange is the Pacific Exchange (PCX) which does not change its order processing when the NYSE invokes sidecar processing rules, the system does not change its processing of program trading order AIC codes (D, C, M, N, J, K, U, Y) when sidecars are triggered on the NYSE. The system will comply with any changes to these rules if and when the PCX modifies its rules.

CQS profiles are created from the quotes of other market participants in the Intermarket Trading System (ITS) at the time of a match, provided that the size of such quotes exceeds 200 shares for Listed equities and is 100 shares or more for Nasdaq stocks and the quote has not produced a locked or crossed market. In either of the latter cases, no CQS profile is created for the corresponding quote. CQS profiles are analogous to regular limit orders, and thus possess standing.

Class Priorities

As shown in the following Table, the system prioritizes Book over Agency profiles, Agency over Principal profiles, and Principal over CQS profiles. CQS profiles are canceled automatically at the end of the cycle in which they participate, since new CQS profiles are created at the beginning of the next cycle.

| Designation of Profile | Priority | Comments |
|---|---|---|
| Book | 1 | All orders received via the host exchange computer system, including specialist quotes. |
| Agency | 2 | Profiles submitted via GUI and marked as Agency, or via FIX or Gateway with AIC codes mapping to Agency. |
| Principal | 3 | Profiles submitted by host exchange specialists, or via GUI and marked as Principal, or via FIX or Gateway with AIC codes mapping to Principal. |
| CQS | 4 | CQS profiles created from quotes of other markets. |

Profile Types

The system supports the following profile type eligibility conditions:

Day: good for the day in which the profile is entered. All profiles are automatically suspended by the system at the end of each trading day, but may be reactivated without loss of time priority prior to the first match of the following day. Except as noted below, this is the default type for all profiles.

All or none: good only for the maximum quantity indicated. Except for profiles submitted via the system GUI, all or none profiles are not eligible to participate in trades against CQS profiles. All or none profiles submitted via the system GUI have a default setting of 0% ITS eligibility, but this may be modified by the user.

Fill or kill: an all or none profile that is automatically cancelled after the next match, if it has not been filled. Fill or kill profiles have the same restrictions regarding ITS participation as described above for all or none profiles.

Immediate or cancel: a profile that is automatically cancelled after the next match, regardless of its leaves quantity.

Good until first fill: a profile that is automatically cancelled after the next match in which it receives any allocation(s).

Corporate buy back: a buy profile submitted by the corporate issuer of the stock being traded. Prior to each match, all coordinates in these profiles priced above the national last sale price are truncated, so that execution of this profile cannot create an up tick with respect to this price.

Profiles marked as short sales are subject to intra-match cycle eligibility restrictions, as explained in detail below.

Time of Entry of a Profile

Book profiles submitted to the system from the host exchange have as their time stamp the host computer system-assigned date and time stamp. Agency and Principal profiles are assigned a date and time stamp by the system at the time of their submittal. All time stamps in the system are unique. Any change to an Agency or Principal profile, other than a reduction of the maximum quantity or a change in ITS participation, results in the assignment by the system of a new, current date and time stamp to the profile. CQS profiles are assigned a date and time stamp corresponding to the actual time the quote was disseminated over the CQS.

Matching Algorithm Stages

Aggregation

In one embodiment of the system and method of the subject invention, preference values of '1' (which indicate full preference to trade) are interpreted as "non-discretionary", analogous to a held order at the corresponding price and size. The matching of contra sides where both parties have a preference of '1' is analogous to the matching of held orders that occurs in existing markets. In such cases, where the mutual preference (i.e., the product of buyer and seller preference) is also '1', the system uses matching rules consistent with the rules of priority used in existing markets. This first stage of matching is denoted as "aggregation" in the system, since it permits multiple coordinates on one side of the market to be matched against a single coordinate on the contra side. Under a "crossed market" condition, as described hereinbelow, the aggregation stage matches multiple buyers and sellers at a clearing price.

Negotiation

Preference values of less than '1' (and greater than zero) are interpreted as giving the system the corresponding degree of discretion in finding contra side matches. The matching of contra sides where one or both parties have less than '1' (but greater than zero) preference is analogous to one-on-one manual negotiations that have no particular rules of priority, which occur in existing market structures. In these cases, the system uses mutual preference (with values less than '1', but greater than zero) as the primary determinant of trading priority. This second stage of matching is denoted as "negotiation" in the system, since it negotiates trades between contra pairs at individual price and size values. Where a prospective match based on partial preference would trade through coordinates with '1' preference that have standing, or trade at the price of such coordinates that have class or time priority, or violate the short sale rule (as described below), this match is blocked.

Priority Rules for Matching

The Aggregation Stage

In the aggregation stage of the system and method of the subject invention, all mutual preference values are '1', since both buy and sell coordinates have preference values of '1'. The priority in which coordinates are considered for aggregation is as follows:

1. Price. Coordinates with more aggressive prices (i.e., higher prices for buy profiles, lower prices for sell profiles) have priority over coordinates with less aggressive prices.
2. Standing. Coordinates that have standing at a particular price have priority over coordinates that do not have standing at that same price, with the exception of CQS profile coordinates. CQS coordinates have the lowest priority for trading at a given price, but cannot be traded through.
3. Class. Among coordinates having the same price and standing, priority is assigned in descending order of Book, Agency, Principal and CQS profiles, respectively. There may also be Principal Exempt.
4. Time of entry. Among coordinates that have equal price, standing and class status, the time of entry of the associated profile determines relative priority, with earlier time of entry having higher priority. Each profile has a unique time of entry assigned upon its receipt by the system, so there are no ties among profiles in this category.
5. Size. Among coordinates of a given price within the same profile, priority for matching is determined by size, with larger sizes having higher priority.

The Negotiation Stage

In the negotiation stage of the matching algorithm of the subject invention, the priority in which matches are considered for allocation is as follows:

1. Mutual preference. Matches with higher mutual preference take precedence over those with lower mutual preference.
2. Standing. Among matches with equal mutual preference, matches involving pairs of standing, nonstanding and CQS coordinates are prioritized in descending order as follows: Standing/standing; Standing/nonstanding; Nonstanding/nonstanding; Standing/CQS; Nonstanding/CQS; CQS/CQS matches (i.e., when away markets are locked or crossed) are forbidden.
3. Class. Among matches with equal mutual preference and standing status, matches involving pairs of Book, Agency, Principal or CQS profiles are prioritized in descending order as follows: Book/Book; Book/Agency; Agency/Agency; Book/Principle; Agency/Principle; Principle/Principle; Book/CQS; Agency/CQS; Principle/CQS; but CQS/CQS matches are prohibited. of entry. Among matches with equal mutual preference, standing and class status, the time of entry of the earlier-entered profile of a given pair determines relative priority, with any subsequent ties (by necessity involving the same earlier-entered profile) resolved in favor of the earlier-entered contra profile of the pair. The Nasdaq market does have Class priority.
4. Size. Among matches having equal mutual preference, standing, class and time of entry (by necessity involving two different coordinates within the same profile pair), priority is given to matches with larger sizes.
5. Intra-pair time of entry. Among matches between the same profile pair where all of the above are tied at more than one price, the best price (i.e., highest price for sellers, lowest price for buyers) is given to the earlier-entered profile of the pair.

Matching Algorithm Constraints

Standing Constraints

For profiles with no ITS eligibility restrictions, the matching algorithm never permits a match that would cause a trade through of any coordinate with standing. Furthermore, no match is permitted at the price of a coordinate with standing, if the latter coordinate has standing or class priority according to the above rules, with the following exceptions:

1. In the event two-sided aggregation is invoked, as described in detail below, price priority overrules class priority, permitting more aggressively priced profiles with standing to trade at the price of less aggressively priced profiles that have class or time priority.
2. Matches between any non-CQS profiles (regardless of their standing status) are always permitted at the price of a CQS profile.

Thus the system provides absolute protection of unrestricted coordinates with standing, both with respect to trade through prevention and with respect to trade-at precedence (with the exceptions noted above). This group includes all profiles that are analogous to regular-way limit orders.

Price and Size Controls

The matching algorithm never permits a match that would result in the violation of any price or size control (implicit or explicit) associated with any profile involved in a match. Pegged profiles (which the user designates to be adjusted with reference to the current market at the beginning of each match cycle) may not contain explicit price controls. All price and/or size control limits affecting a particular coordinate must be satisfied in order for the coordinate to participate in a trade.

A profile with one or more size controls has no coordinates with standing, at any size or price.

As previously noted, implicit price controls, at each price where they are generated, are automatically reset and/or recomputed at the beginning of each matching cycle. Thus they do not prevent the accumulation of trade volumes at a particular price across multiple matches that otherwise might be disallowed in a single match. Users must employ explicit price controls to prevent this occurrence.

Intermarket Trading System Eligibility

In one aspect of this embodiment, every profile submitted through the system GUI designates the portion of the maximum quantity associated with the profile that is eligible for matching against CQS profiles. The system GUI default setting for ITS eligibility is 0% for all or none and fill or kill profile types, and is 100% for all other profile types. CQS profiles are always included in system matches, but have lower class priority than any other profile type in the system. Matches involving a CQS profile carry an implicit risk of not executing the trade, since the ITS commitment sent to another market may be only partially filled, or may expire or be declined. Users who elect to limit the eligibility of their profile for ITS trades may lose some trading opportunities and/or some degree of standing protection in the system, since all CQS profile coordinates have standing, and thus trading through these coordinates is forbidden. In particular, profile coordinates that possess standing, but have declined any portion of a trade due to ITS limits, are not permitted to block other trades as a result of their standing. This may potentially result in a trade-through of these coordinates. Notwithstanding these considerations, the system and method does not permit a match that would result in a violation of the ITS eligibility limits for any profile.

ITS trading limits, if employed, specify the percentage of the total original profile volume (not the remaining "leaves" quantity) that is eligible for matching against CQS profiles in each match. However, should an ITS commitment generated by a profile in an earlier match cycle still be pending at the commencement of the next match cycle for any reason, the volume associated with this commitment is subtracted from the ITS eligible volume in the current match. As a result, there is no possibility of exceeding the profile's ITS exposure limit. For example, a profile submitted with the maximum quantity specified as 100,000 shares, and the ITS eligibility specified as 10%, normally is permitted to match up to 10,000 shares against CQS profiles in aggregate in each match cycle. However, if a previous match cycle resulted in the generation of an ITS commitment against this profile of 5,000 shares, and this commitment is still pending at the commencement of the current match cycle, then only 5,000 shares is eligible for matching against CQS profiles in the current cycle.

Short Sales

At the beginning of each matching cycle, the national last sale and tick is used to initialize the eligibility of short sell profile coordinates. At each subsequent stage of internal trade allocation within the system matching cycle, the internal last sale and tick is used to update the eligibility of short sell profile coordinates. No allocation involving a short sell coordinate is allowed at a price less than the internal last sale (on a plus or zero-plus internal tick) or at a price less than one price increment above the internal last sale (on a minus or zero-minus internal tick). Short sell coordinates that lose their eligibility at any stage internal to a match cycle receive a new effective time stamp upon restoration of their eligibility within that cycle, which results in a loss of their original time of entry priority for the balance of that matching cycle. The profile's original time of entry is used to prioritize short sell coordinates at the same price that have been disabled during a cycle, and also is used at the start of the next cycle to determine time of entry priority for that cycle. For the Nasdaq market, short sale coordinate participation is based on the price of the Inside Bid at the start of the matching cycle. Coordinates that are 1/16th above the Bid participate. The internal last sale and tick condition do not have an affect on short sale coordinate participation during the matching cycle.

CQS Profile Matches

In this embodiment, the matching system and method of the subject invention does not permit a match between two CQS profiles or Nasdaq Quote Profiles.

Matching Algorithm Procedure

The Aggregation Stage

In the aggregation stage of the algorithm, which applies only to coordinates with preference values of '1', adjacent coordinates within each profile at each price are grouped into kernels. Each kernel represents a single-price row of contiguous coordinates in the profile, having '1' preference values. In addition to its price, each kernel is parameterized by the minimum and maximum number of shares spanned by the row of '1' coordinates. For each profile, kernels are generated at every price increment lying in the range of price overlap with contra-side profiles. A single buy kernel list and a single sell kernel list are constructed from the kernels of all profiles, via a sequence of nested sorts of each list in strict order of price, standing, class and time of entry priority, as described above. (Note that the size sort on coordinates mentioned hereinabove is implicit in the kernel structure, given that kernels always seek to fill their maximum size, but no less than their minimum size.)

In accordance with the subject invention, normal aggregation is one-sided, in the sense that a single kernel on one side of the market aggregates potentially multiple kernels from the opposite side. However, there are instances where multiple kernels with standing on each side of the market overlap in price, in which case one-sided aggregation is blocked by the standing constraints. When the latter situation is detected, two-sided aggregation is used (as described hereinbelow) to clear these overlaps before resuming with one-sided aggregation.

<u>One-sided Aggregation</u>

An earlier entered (non-CQS profile) kernel at the top of either the buy or sell kernel list is selected as the initial "aggregation attractor" kernel. The matching algorithm then attempts to aggregate volume from kernels on the contra list, in strict order of priority on that list, in order to match the aggregation attractor's size and price. The matching algorithm proceeds through the contra list in priority order in its attempt to allocate contra parties to the aggregation attractor. Kernels without standing in this contra list may be skipped over if their minimum and maximum size limits are incompatible with the size limits of the aggregation attractor kernel. The potential trade price is set initially to the aggregation attractor's price, and the aggregate contra list is examined to see whether sufficient contra volume exists to satisfy at least the minimum volume demanded by the price of the aggregation attractor kernel. In one aspect of this embodiment, the aggregation process always seeks the maximum volume available for the attractor kernel, and is repeated for that kernel if the profile maximum volume is larger than the aggregator kernel maximum volume, so long as none of the other profile constraints is violated.

If at least the minimum required volume can be aggregated to the attractor, but the resulting set of trades would trade through kernels with standing on the contra list, the attractor kernel is skipped over, and the next-highest priority kernel is selected from either the buy or sell list. Also, if the resulting set of trades fills kernels with lower class priority (excluding CQS kernels) without completely filling all kernels with higher class priority and standing at that price, the attractor kernel is skipped over. This process continues until a price is determined at which the aggregation attractor can attract adequate volume from the contra list without trading through any contra kernels with standing, or trading at the price of higher class priority contra kernels with standing. This price is then checked to see if it trades through the price of any kernel with standing on the attractor's side. If it does, the prospective aggregation trades are disallowed. If the unsuccessful aggregation attractor kernel has standing, the choice of the next aggregation kernel is restricted to the contra list. If an aggregation attractor kernel with standing cannot make an otherwise permissible trade due to its ITS participation being restricted, it may be traded through in subsequent trades of a given cycle, in order to prevent it from blocking other trades.

If the aggregation price determined above is permissible, the matching algorithm seeks to improve the trade price for the aggregation attractor by one price increment, and recalculates the available trade volume. This price improvement process repeats until the improved price results in a decrease in the available volume to trade. However, price improvement for the aggregation attractor is halted if the resulting price would trade through the price of any coordinate with standing on its side of the market or trade through any coordinate that is willing to do the identical trade (i.e., same price and size), regardless of whether the latter coordinate has standing or not. The attractor's price also may not trade at (if the aggregation attractor has standing but does not have class priority, or if the aggregation attractor does not have standing) the price of any kernel possessing standing from another profile on the aggregation attractor's side of the market, unless the latter is a CQS profile.

Should an aggregation attractor with standing be unable to trade due to a violation of one of the above constraints and there is at least one other kernel with standing on the same side at the same price, the matching algorithm selects the next aggregation attractor only from the contra list, and attempts aggregation. If the same situation arises in which a contra aggregation attractor with standing is blocked from trading by a kernel on its side of the market, then one-sided aggregation is blocked on both sides, and we proceed to the two sided aggregation stage described in the next section.

The aggregation process continues until no further aggregations are possible. The matching algorithm then proceeds into the negotiation stage, described in detail hereinbelow.

<u>Two-sided aggregation</u>

The purpose of this stage of the matching algorithm is to clear multiple overlapping kernels with standing that block one-sided aggregation. This stage operates in somewhat analogous fashion to a single-price call, but with greater generality, since all kernels with standing (even if they are derived from profiles that do not correspond to standard limit orders) are included in two-sided aggregation.

In two-sided aggregation, supply and demand schedules as a function of price, representing all trading interest with standing, are assembled. The price that matches the most volume is selected, and the corresponding trades are executed. If there are multiple prices that clear the same maximum volume, the highest price is selected if there exists a buyer surplus, and the lowest price is selected if there exists a seller surplus. If there is an exact match of buyer/seller volume over a range of prices, the middle price is selected if there are an odd number of tied prices with no surplus. If there is an even number of tied prices with no surplus, then of the two middle prices, the one is selected that is closer to the last sale price recorded by the system. This is the national last sale if this occurs at the beginning of a match cycle, or the last committed trade price in the middle of a cycle.

Since only kernels with standing are included in the two-sided aggregation stage, the priority order for trading is as follows: Price; Class; and Time of Entry.

In two-sided aggregation, price has strict priority over class. Thus in this sole instance, a kernel with lower class priority may trade at the price of a kernel with higher class priority without completely filling the latter, if the former kernel is from a profile with more aggressively priced kernels than the latter. The net effect of two-sided aggregation is to clear any overlapping active contra kernels with standing, so that one-sided aggregation can resume.

The Negotiation Stage

The negotiation stage begins by calculating mutual preference profiles between all pairs of buy and sell preference profiles. The non-zero mutual preference coordinates from all mutual preference profiles are then entered into a single list that is rank ordered in descending order of priority as described hereinabove. Prospective matches are assembled sequentially from the top of this list.

For each prospective match, the matching algorithm ensures that none of the profile constraints of described above would be violated as a result of making the corresponding allocation to either party. In the case where the prospective match would:

1. Trade through the price of a coordinate with standing, or
2. Trade at the price of a coordinate with standing, where the latter has class or time priority over the corresponding side of the prospective match (i.e., a buy (sell) coordinate with standing has class or time priority over the buy (sell) coordinate involved in the negotiation pair), the match is blocked, and the algorithm proceeds to the next coordinate on the list.

In the case where a prospective match involves a short seller, the corresponding price must be:

1. At or above the previous trade price, if the latter price represents a plus or zero-plus tick,
2. At least one price increment above the previous trade price if the latter price represents a minus or zero- minus tick.

When a down tick occurs from one trade to the next, certain short sell coordinates at prices above the new price become newly eligible to trade. In this case, the negotiation coordinate list is re-sorted to incorporate the changed eligibility and time stamps of these reactivated short sell coordinates, and is then rescanned from the top to continue trading. This revisits negotiation coordinates that previously may have been skipped over because they were blocked or ineligible to trade.

The negotiation stage terminates when no non-zero mutual preference coordinates remain on the list, i.e., there is no remaining overlap of trading desire between any buyer and seller.

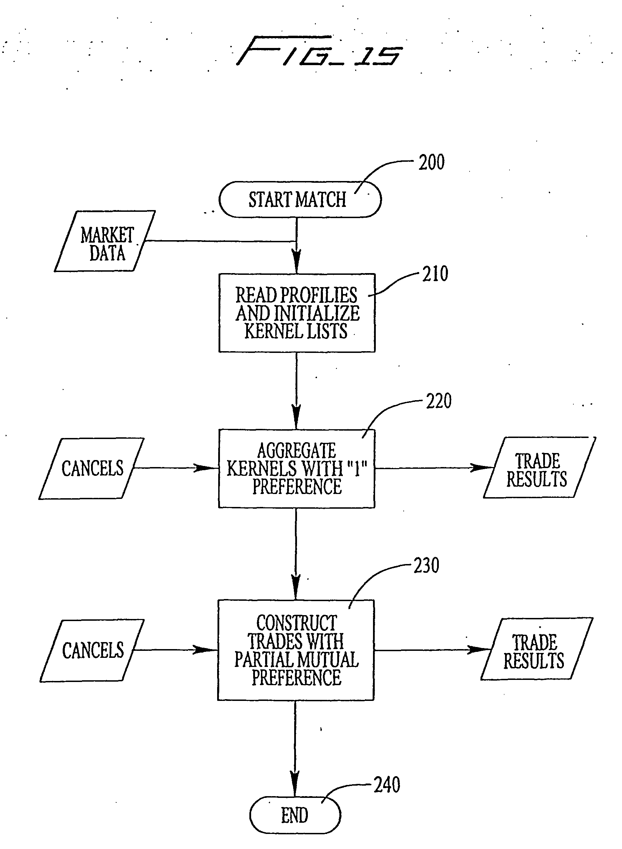

Referring now to Fig. 15, there is illustrated a schematic flow chart illustrating the overall system and method of the subject invention. At step 200, market data is received into the system to facilitate, for example, the determination of pegging reference prices for trades. At step 210, the CMC reads the preference profiles and generates the kernel lists on either side of the market. Then, at step 220 the aggregation stage is conducted, which results in the execution of trades and the cancellation of filled buy/sell orders. The negotiation stage is then conducted at step 230, whereupon trades are constructed based upon partial mutual preference, resulting in the cancellation of additional filled buy/sell orders and the execution of additional trades. At step 240 the method terminates.

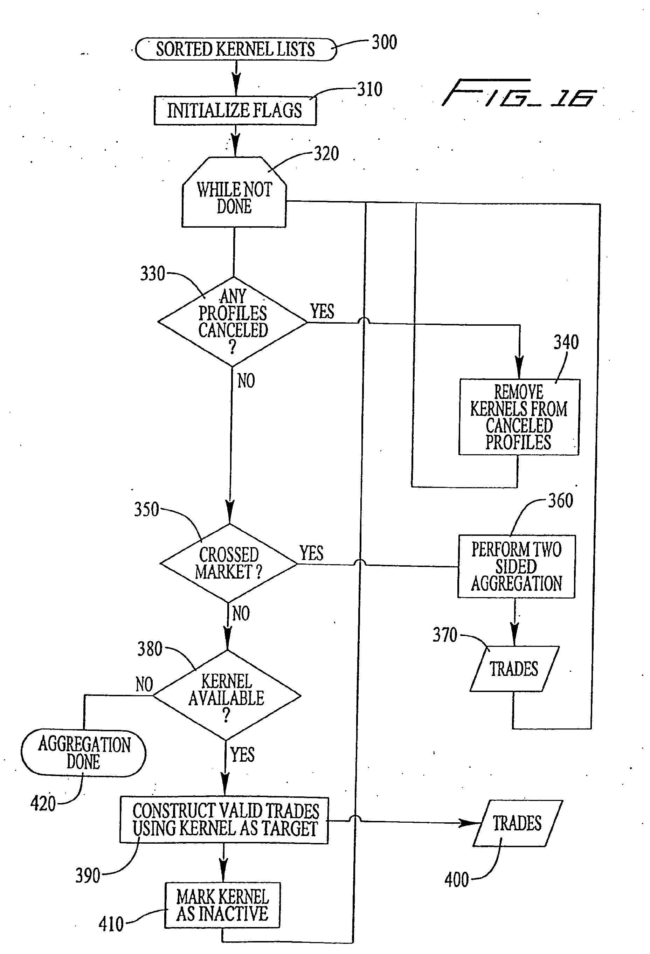

Referring now to Fig. 16, there is illustrated a schematic flow chart of the aggregation stage of the matching algorithm shown in Fig. 15. Initially, at step 300, the buy kernel lists and sell kernel lists constructed from the profiles on either side of the market are sorted in strict order of price, standing class and time of entry. At step 310, flags are initialized for each kernel so as to designate the profile characteristics associated therewith. Step 320 represents a loop return point for the aggregation algorithm which is revisited until such time as the aggregation stage is completed.

At step 330, the system determines whether any profiles have been cancelled. At such a time, the system looks to a prioritized queue to seek out client initiated profile cancellations. If the inquiry at step 330 is positive, kernels from any cancelled profile on either side of the market are removed from the contra side kernel lists at step 340. If the inquiry is negative, the system proceeds to step 350, whereupon a determination is made as to whether there is a crossed market condition, i.e., if one-sided aggregation is blocked on both sides of the market.

If a crossed market condition exists, the system performs a two-sided aggregation at step 360 to clear multiple overlapping kernels with standing that would block one-sided aggregation. The trades resulting from the two-sided aggregation are executed at step 370, and the system returns to step 320 to begin the cancelled kernel removal subroutine at steps 330 and 340. Returning to step 350, if a crossed market condition does not exist, the system proceeds to step 380, whereupon a determination is made as to whether there are any kernels available for aggregation. If the inquiry is positive, the system constructs valid trades at step 390 until a profile constraint is violated. In conjunction with step 390, valid trades are committed at step 400, and kernels having traded out their volume are marked as inactive at step 410. It should be noted that inactive kernels may still have some remaining volume associated therewith, to the extent that a complete aggregation of contra side volume was not achieved. From step 410, the algorithm return to step 320 to perform the called kernel removal subroutine. The aggregation stage of the subject matching algorithm will terminate at step 420 when it is determined that there are no kernels available for aggregation at step 380.

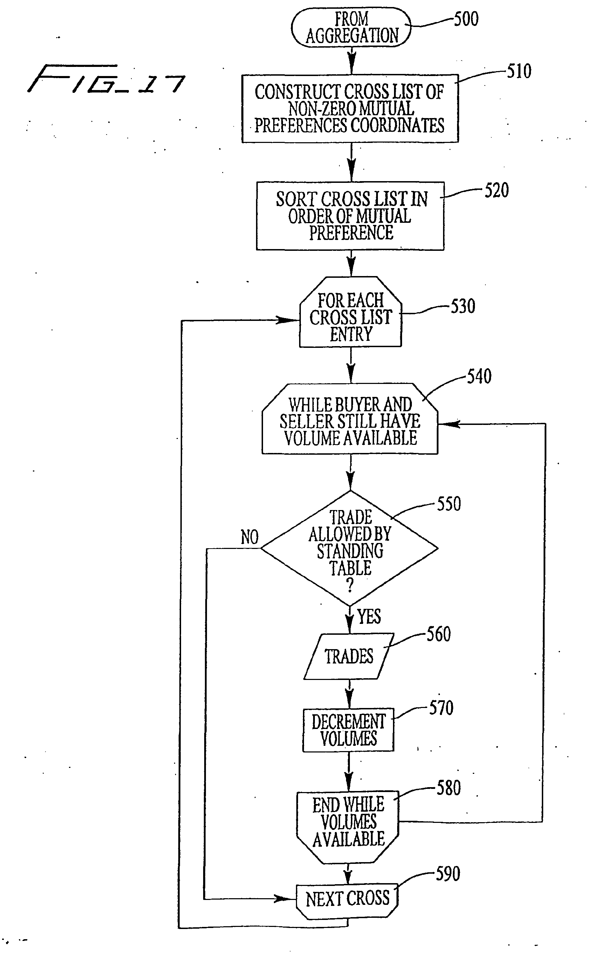

Referring now to Fig. 17, there is illustrated a schematic flow chart depicting the negotiation stage of the subject matching algorithm identified at step 230 of Fig. 15. As discussed hereinabove, the negotiation stage follows the aggregation stage as shown at step 500. At step 510, the system constructs a cross list of non-zero mutual preference coordinates by calculating mutual preference between all pairs of buy and sell profiles. Then, at step 520, the list is sorted and ranked in descending order of priority by mutual preference, standing, class, time of entry, size and price. The system then proceeds to step 530 whereupon, for each cross list entry, the following subroutine commences.

At step 540, while the buyer and seller for each entry on the cross list have volume available, the system proceeds to step 550. Thereupon, a decision is made as to whether a trade should be allowed or blocked due to standing constraints. If the inquiry at step 550 is positive, the subroutine proceeds to step 560 whereupon a trade between the buyer and seller is committed. Thereafter, at step 570, the volumes are deceremented and appropriate flags are initialized with respect to the traded coordinates. The system then proceeds to step 580. At step 580 the negotiation stage can terminate, proceed to the next cross list entry at step 590 or return to step 540. Upon proceeding to step 590, the algorithm will return to step 530 to run through the trading subroutine. Returning to the decision at step 550, if the inquiry as to the allowability of the trade is negative, the system proceeds directly to step 590 to evaluate the next cross list entry. The negotiation stage terminates when there are no non-zero mutual preference coordinates remaining on the cross list. This indicates that there is an absence of overlap of trading desire between any paired buyer or seller.

The Third Stage

At the conclusion of the Negotiation Stage, the matching algorithm of the subject invention proceeds to a third stage in which the system is configured to search for more liquidity and generate additional matches by performing, full and partial preference aggregation on both sides of the market, many-to-many as well as one-to-many matches for both full and partial preference trading interest, and unblocking possible matches currently blocked by profiles with standing or incompatible geometry.

During the third stage of the matching cycle, the system looks at all the available trading interest left over from the Aggregation and Negotiation Stages, combines the left over volumes at each price increment, and looks for overlapping interest at these combined volumes.

To combine the available trading interest, the system creates "Synthetic Profiles." A Synthetic Profile is a single-kernel Profile that is created by aggregating volumes from multiple individual Profiles, either regular or synthetic, at a given price. Each Synthetic Profile has a single price, a volume range, and a single preference value. In accordance with the subject invention, the preference value that is assigned to the Synthetic Profile is the lowest preference value of the constituent Profiles from which the Synthetic profile is generated.

Synthetic Profiles have a class priority of "synthetic," which becomes the highest priority for class during the third stage of the matching process. Because ties in price, class, and timestamp can occur between a Synthetic Profile and a regular Profile, the new class of synthetic breaks these ties. In order to maintain trade-through protection, the class of synthetic has higher priority to trade over regular agency and principal Profiles.

The third stage of the matching process of the subject invention includes regular Profiles as well as the Synthetic Profiles and follows the same matching rules as the Negotiation Stage matching process, described hereinabove. After each match of a buyer and seller, the system deletes all of the Synthetic Profiles, creates new Synthetic Profiles based upon the available trading interest, and searches for the next match. The matching process ends when the system cannot find any more matches among the regular and Synthetic Profiles.

For efficient processing, the matching algorithm of the subject invention, breaks profiles into "kernels." As explained hereinabove, a kernel is a horizontal slices of a profile that describes a region of that profile. Kernels compress a particular profile's entire trading strategy into a few pieces of information. Each kernel contains a price, volume range, preference value, standing flag, timestamp, and class. Splitting profiles into multiple kernels allows the matching algorithm to quickly and efficiently sort a large number of profiles and allocate matches therebetween.

The general procedure for creating kernels is as follows: For each profile, at every valid price increment, the system scans the price row for a preference value. For every preference value found, the system creates a kernel and sets its attributes. In particular, the minimum size for the kernel is set as the smallest size containing this preference value. The maximum size for the kernel is the largest size containing this preference value. The preference value of the kernel is the preference value found at that price/quantity point, and the price of the kernel is the price increment of the row from which the kernel is generated. The kernel is flagged by the system if it has standing, and a timestamp and class is assigned to the kernel based upon that of the profile from which it was generated.

A simple limit Profile to buy 200,000 shares of a stock at $100 has a single kernel with the following attributes: Minimum size of 100; Maximum size of 200,000; Preference value of 1.0; Price of $100.00; Standing; Profile's time; and Profile's class. A Profile to sell 100,000 shares at $50 with 1/8 point of discretion has the following kernels:

| Price | Preference | Minimum size | Maximum size |
|---|---|---|---|
| $50.00 | 1.0 | 100 | 100,000 |
| $49 15/16 | 0.66 | 100 | 100,000 |
| $49 7/8 | 0.33 | 100 | 100,000 |

Profiles with complex trading strategies have many kernels, as shown in the scaled back profile illustrated for example in Fig. 18. Referring to Fig. 18, the illustrated Profile has the following six kernels each having a price, preference value, minimum size and maximum size:

| Price | Preference | Minimum size | Maximum size |
|---|---|---|---|
| $50.00 | 1.0 | 100 | 25,000 |
| $50.00 | 0.50 | 25,100 | 75,000 |
| $50.00 | 0.33 | 75,100 | 100,000 |
| $49 15/16 | 1.0 | 100 | 75,000 |
| $49 15/16 | 0.66 | 75,100 | 100,000 |
| $49 7/8 | 1.0 | 100 | 100,000 |

Creating Synthetic Profiles

A Synthetic Profile has a single kernel that defines the trading interest therefor, as opposed to a regular Profile that can have multiple kernels. In creating Synthetic Profiles, the system reviews the existing kernel list remaining from the Negotiation Stage and aggregates the volumes of individual Profiles. Aggregate volumes can be taken from either two regular Profiles or a regular Profile and a Synthetic Profile to create the volume range for a Synthetic Profile.

To aggregate the kernels, the system identifies, by price, a "Base Kernel" (i.e., the kernel with the highest priority to trade) and an "Additive Kernel" (i.e., the kernel next in line to trade after the Base Kernel) and adds the respective volumes thereof to generate the volume range of the Synthetic Profile. This additive process conveniently provides trade-through protection for the constituent profiles from which the Synthetic Profile is generated.

In general, the procedure implemented by the system to create a Synthetic Profiles begins at the conclusion of the Negotiation Stage. At such a time, for both the leftover buyer and seller profiles remaining after the Negotiation Stage, for each price increment and preference value, the system sorts the kernel list according to the current priority rules. During this third stage of the matching cycle, the priority variables are preference, standing, class, time, and size. After sorting, the system sets the Base Kernel to the kernel with the highest priority to trade, and the Additive Kernel to the kernel with the second highest priority. Then, until such time as there are no more kernels at a particular price increment, the system creates the Synthetic Profile and sets its attributes in the following manner.

The price of the Synthetic Profile is the price increment at which aggregation is being conducted. The system then determines whether any Profiles at the aggregating price increment also have standing at more aggressive prices. If this is the case, the Minimum Volume for the Synthetic Profile is the sum of the volumes of all of the constituent Profiles with standing forming the Synthetic Profile, and the Maximum Volume is the sum of the volumes of all of the constituent Profiles forming the Synthetic Profile. If the system determines that all of the Profiles at the aggregating price increment do not have standing at more aggressive prices, the Minimum Volume of the Synthetic Profile is the sum of the Maximum Volume of the Base Kernel and the Minimum Volume of the Additive Kernel. The Maximum Volume of the Synthetic Profile is the sum of the Maximum Volume of the Base Kernel and the Maximum Volume of the Additive Kernel. The preference value of the Synthetic Profile is set at the lower of the preferences of the Base and Additive Kernels, and the class is designated as Synthetic. Thereafter, the Base Kernel is set to the Synthetic Profile kernel just created, the Additive Kernel is set to the regular Profile kernel with the next priority to trade, and the aggregating process continues to proceed through this loop until there are no kernels remaining at the aggregating price increment.

Since a synthetic Profile includes a Base Kernel that determines a minimum volume greater than one round lot for the Synthetic Profile, it never has standing. A round lot is the minimum trading volume increment for a particular market. In accordance with the subject invention, any constraints on a constituent profile will carry over to the Synthetic Profile with which it becomes associated. For example, if the trading characteristic of the profile from which an Additive Kernel is derived is "All or None" , then the Synthetic Profile created therefrom is also "All or None". Subsequent Synthetic Profiles embed the "All or None" characteristics of the original "All or None" profile even though they may themselves span large volume ranges.

Creating Full Preference Synthetic Profiles

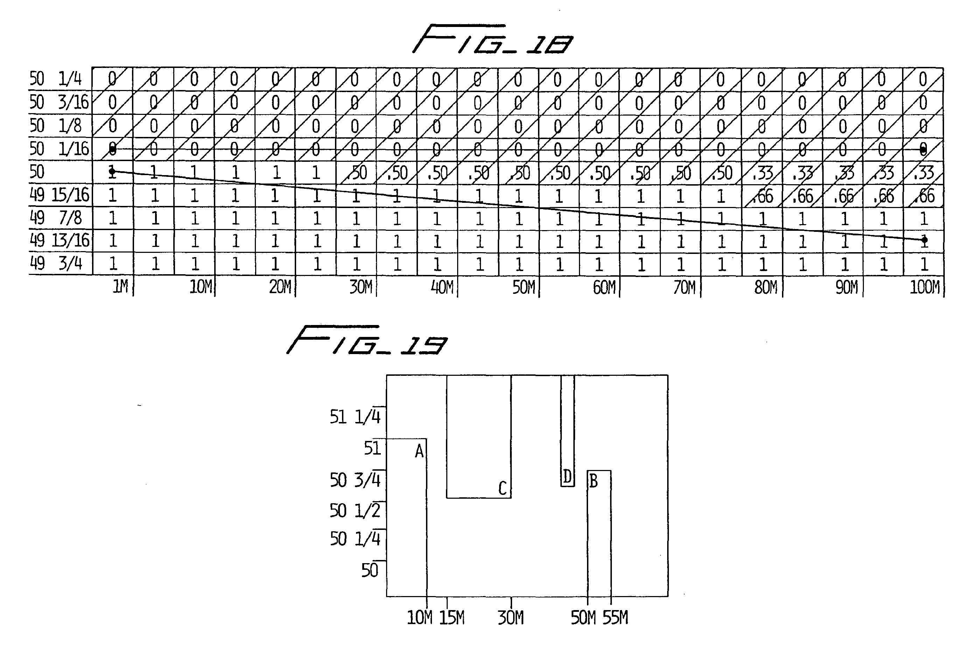

By way of example, and with reference to Fig. 19, a full preference Synthetic Profile may be created from a set of profiles including two limit buyers and two limit sellers in the following manner. Assume the profile set illustrated in Fig. 19 contains limit buyers A and B, and limit sellers C and D, wherein:

Profile A is limit buy order to $51.00 for 10,000 shares;

Profile B is a large buy order to $50.75 for 50,000 to 55,000 shares;

Profile C is a large sell order at $50.50 for 15,000 to 30,000 shares; and

Profile D is an All or None sell order to $50.4375 for 45,000 shares.

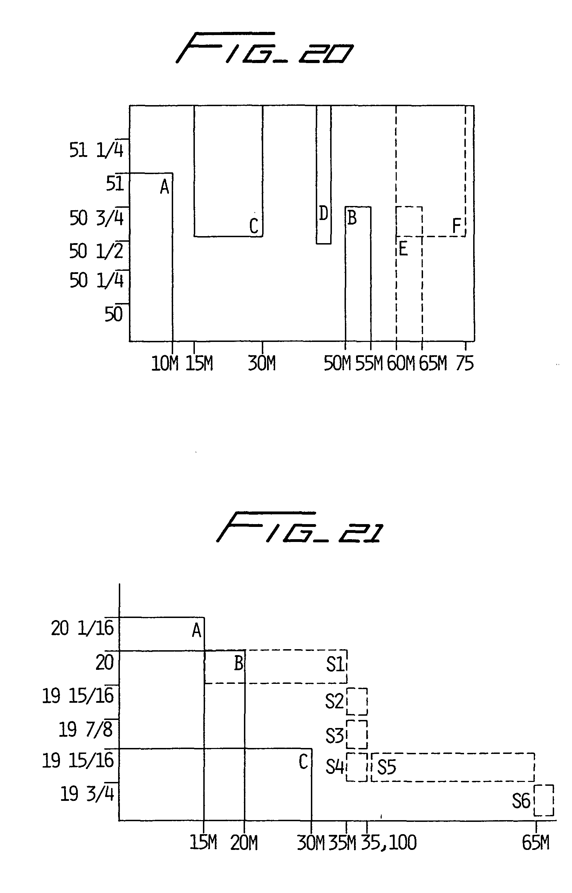

In this scenario, Profile A has time priority over Profile B, and Profile D has time priority over Profile C. Under these circumstances, there is no overlap among the profiles in this set and thus no trades occur during the Aggregation and Negotiation Stages of the matching cycle of the subject invention. Therefore, during the third stage of the matching cycle, as shown in Fig. 20, the system will create the following Synthetic Profiles E and F, where, in accordance with the steps described hereinabove, an aggregation is performed using Profile A as the Base Kernel and profile B as the Additive Kernel, such that Profile E is a synthetic buyer at $50.75 with a minimum volume of 60,000 and a maximum volume of 65,000 shares. This additive process provides trade-through protection for the constituent profiles from which the Synthetic Profile E is generated.

| Base Kernel | A (A has standing priority over B.) |
|---|---|
| Additive Kernel | B |
| $E_{MIN}$ | $A_{MAX}$ (10,000) +$B_{MIN}$ (50,000) = 60,000 |
| $E_{MAX}$ | $A_{MAX}$ (10,000) +$B_{MAX}$ (55,000) = 65,000 |

Profile F is created by using Profile D as the Base Kernel and Profile C as the Additive Kernel, such that Profile F is a synthetic seller at $50.50 with a minimum volume of 60,000 to and a maximum volume of 75,000 shares.

| Base Kernel | D (D has time priority over C.) |
|---|---|
| Additive Kernel | C |
| $F_{MIN}$ | $D_{MAX}$ (45,000) +$C_{MIN}$ (15,000) = 60,000 |
| $F_{MAX}$ | $D_{MAX}$ (45,000) +$C_{MAX}$ (30,000) = 75,000 |

Following the rules of the Negotiation Stage when allocating trades, during the third stage of the matching process, Profiles E and F are matched at $50.625 for 65,000 shares. When all other priority variables are equal among the overlapping kernels, the system determines the price for the trade by selecting a midpoint price.

In this example, on the buy side, both Profiles A and B trade completely. On the sell side, Profile D, the All or None order, trades 45,000 and the less aggressive seller, Profile C, trades 20,000. Because the full volume of the Base Kernel comprising the Synthetic Profile sets the minimum volume for the Synthetic Profile, the Base Kernel always trades completely when a Synthetic Profile matches with any other profile during the third stage of the process. It should be appreciated that the Additive Kernel can receive a partial fill, absent some additional restriction such as, for example, a profile having an All-or-None eligibility condition associated therewith.

Overlapping Profiles with Standing

In order to protect against trading through profiles with standing during the third stage of the matching cycle, a special case exists in creating Synthetic Profiles where multiple profiles on the same side of the market have standing and overlap in price. Moreover, if all of the constituent profiles constituting a Synthetic Profile have standing at more aggressive prices, the Synthetic Profile has a single volume (the sum of all the constituent Profiles) and is treated as an "All or None" profile. If the synthetic Profile trades at this price, it must trade the full volume so that no constituent profile is traded through.

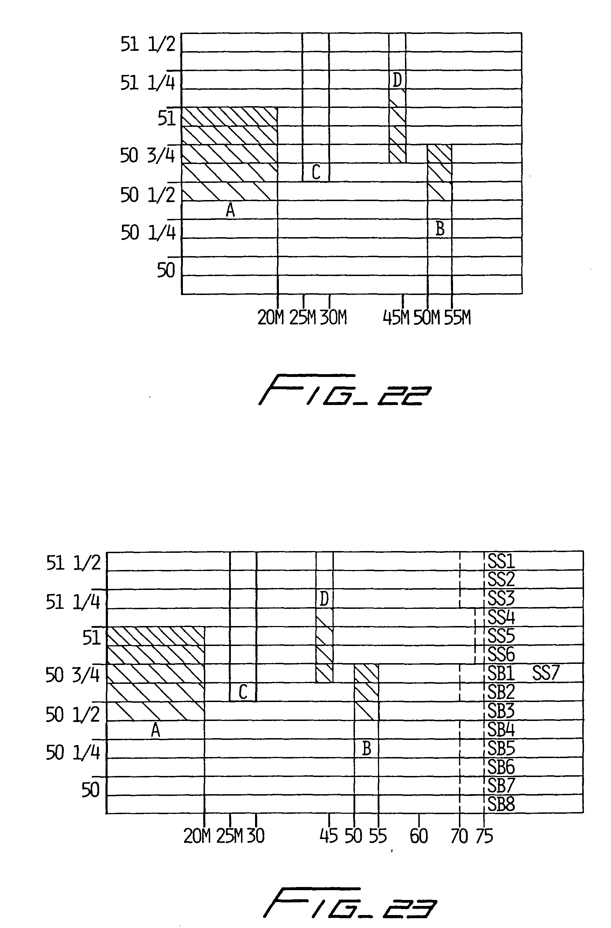

Referring to Fig. 21, there is illustrated an example of a set of three limit buy orders represented by regular limit Profiles A, B, and C, from which Synthetic Profiles S1-S6 are generated.

Profile A is a limit buy order for 15,000 shares at $20 1/16;

Profile B is a limit buy order for 20,000 shares at $20; and

Profile C is a limit buy order for 30,000 shares at $19 13/16.

In accordance with the subject invention, at the price increment of $20 1/16, the system does not create a Synthetic Profile because there is no other buy order at that price other than buyer A. However, in the third stage of the matching process, all regular profiles participate along with all of the Synthetic Profiles. Accordingly, Profile A participates at $20 1/16. At the $20 price increment, the system creates Synthetic Profile S1 which has the following characteristics:

| | |
|---|---|
| Base Kernel | A (A has time priority over B.) |
| Additive Kernel | B |
| $S1_{MIN}$ | $A_{MAX}$ (15M) + $B_{MIN}$ (100) = 15,100 |
| $S1_{MAX}$ | $A_{MAX}$ (15M) + $B_{MAX}$ (20M) = 35M |

With continuing reference to Fig. 21, at the $19 15/16 price increment, the system generates Synthetic Profile S2. Because this is a new price increment, the system searches for a new Base Kernel. Thus, the system looks at Profile A at the $19 15/16 as the Base Kernel and Profile B as the Additive Kernel. Since Profiles A and B both have standing at more aggressive prices, the system aggregates the volumes from Profiles A and B and considers Synthetic profile S2 as an "All or None" order such that neither profile receives a partial trade at $19 15/16, as such would result in a trade through.

| | |
|---|---|
| Base Kernel | A and B (Both have standing at more aggressive prices.) |
| Additive Kernel | N/A |
| $S2_{MIN}$ | $A_{MAX}$ (15M) + $B_{MAX}$ (20M) = 35M |
| $S2_{MAX}$ | $A_{MAX}$ (15M) + $B_{MAX}$ (20M) = 35M |

At the $19 7/8 price increment, the system generates Synthetic Profile S3, which is another "All or None" profile, and it has the following characteristics:

| | |
|---|---|
| Base Kernel | A and B (Both have standing at more aggressive prices.) |
| Additive Kernel | N/A |
| $S3_{MIN}$ | $A_{MAX}$ (15M) + $B_{MAX}$ (20M) = 35M |
| $S3_{MAX}$ | $A_{MAX}$ (15M) + $B_{MAX}$ (20M) = 35M |

At the $19 13/16 price increment, the system generates Synthetic Profile S4, which is also an "All or None" profile, and it has the following characteristics:

| | |
|---|---|
| Base Kernel | A and B (Both have standing at more aggressive prices.) |
| Additive Kernel | N/A |
| $S4_{MIN}$ | $A_{MAX}$ (15M) + $B_{MAX}$ (20M) = 35M |
| $S4_{MAX}$ | $A_{MAX}$ (15M) + $B_{MAX}$ (20M) = 35M |

At the $19 13/16 price increment, the system also generates Synthetic Profile S5. It does so by using Synthetic Profile S4 as the Base Kernel. To determine the Additive kernel, the system looks at the most aggressive price for Profile C, i.e., $19 13/16, and at this price, Profile C can receive partial trades. Synthetic Profile S5 has the following characteristics:

Base Kernel        S4 (CODA uses the previous synthetic at this price)
Additive Kernel    C
$S5_{MIN}$          $S4_{MAX}$ (35M) + $C_{MIN}$ (100) = 35,100
$S5_{MAX}$          $S4_{MAX}$ (35M) + $C_{MAX}$ (30M) = 65M

At the price increment of $19 ¾, Synthetic Profile S6 is generated, and it is an "All or None" profile representing the volumes of regular Profiles A, B, and C, with following characteristics:

Base Kernel        A, B, and C (All have standing at more aggressive prices.)
Additive Kernel    N/A
$S6_{MIN}$          $A_{MAY}$ (15M) + $B_{MAY}$ (20M) + $C_{MAY}$(30M) = 65M
$S6_{MAX}$          $A_{MAX}$ (15M) + $B_{MAX}$ (20M) + $C_{MAX}$(30M) = 65M

Those skilled in the art to which the subject invention appertains will readily appreciate that the volume ranges for all Synthetic Profiles at lower prices are determined by following the same construction technique employed to generate Synthetic Profile S6.

Creating Partial Preference Synthetic Profiles

For profiles containing partial preference, i.e., those in which the preference value is less than "1", the system employs a similar additive process to create Synthetic Profiles. Since the Base Kernel and Additive Kernels can have different preference values, the system needs to assign an aggregate preference value to the Synthetic Profiles. Moreover, because Synthetic Profiles are formed from several constituent profiles, it is necessary to ensure that no matching rules are violated when a Synthetic Profile is matched against any other profile.

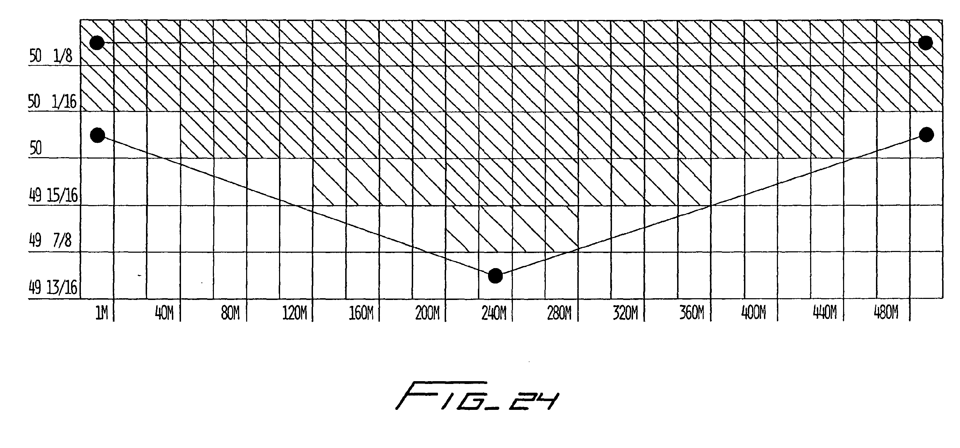

The system meets this requirement by assigning a minimum preference value to a Synthetic Profile, which is the minimum preference value of any of its constituent profiles. This also facilitates a more rapid construction of Synthetic Profiles, which is an important consideration, in part, because Synthetic Profiles are recalculated at each relevant price, every time a match is allocated. By way of example, with reference to Fig. 22 which shows the following partial preference Profiles A, B, C, and D, where:

    Profile A represents Buyer with discretion to $51 for 20,000 shares;

    Profile B represents a Large Buyer with discretion to $50 ¾ for 50,000 to 55,000 shares;

    Profile C represents a Large Seller to $50 ½ from 25,000 to 30,000 shares; and

    Profile D represents an "All or None" Seller with discretion to $50 5/8 for 45,000 shares.

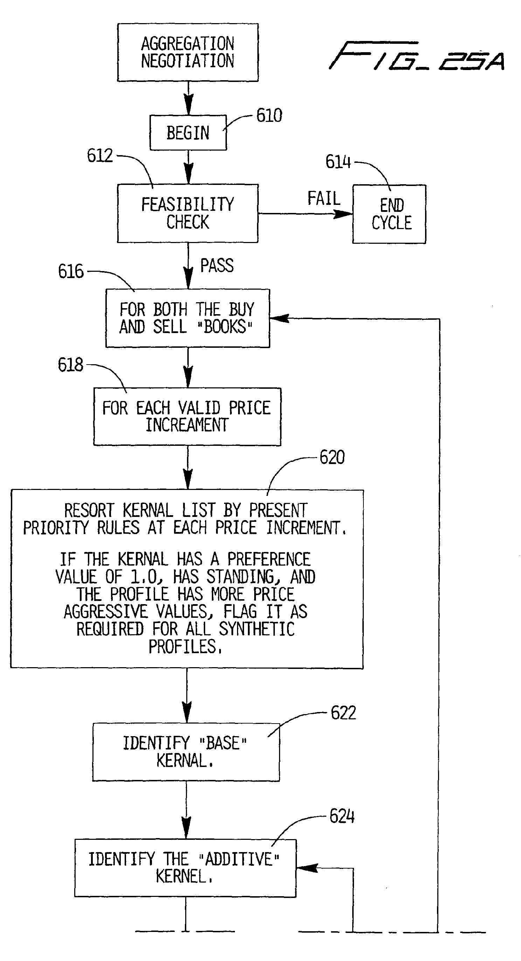

Among these four profiles, Profile B has time priority over Profile A, and Profile D has time priority over Profile C. In processing this set of Profiles, the system constructs the synthetic sell Profiles SS1-SS7 and the synthetic buy Profiles SB1-SB8, which are illustrated in Fig. 23. The synthetic Profiles are created in the following way.

At $51 ½, the system creates SS1, which represents a seller from 70,000 to 75,000 shares. SS1 has a preference of 1.0.

Base Kernel        D (D has time priority over C)
Additive Kernel    C
$SS1_{MIN}$         $D_{MAX}$ (45M) + $C_{MIN}$ (25M) = 70M
$SS1_{MAX}$         $D_{MAX}$ (45M) + $C_{MAX}$ (30M) = 75M

At $51 3/8, the system creates SS2, which represents a seller from 70,000 to 75,000 shares. SS2 has a preference of 1.0.

Base Kernel        D (D has time priority over C)
Additive Kernel    C
$SS2_{MIN}$         $D_{MAX}$ (45M) + $C_{MIN}$ (25M) = 70M

| SS2$_{MAX}$ | D$_{MAX}$ (45M) + C$_{MAX}$ (30M) = 75M |
|---|---|

At $51 ¼, the system creates SS3, which represents a seller from 70,000 to 75,000 shares. SS3 also has a preference of 1.0.

| Base Kernel | D (D has time priority over C) |
|---|---|
| Additive Kernel | C |
| SS3$_{MIN}$ | D$_{MAX}$ (45M) + C$_{MIN}$ (25M) = 70M |
| SS3$_{MAX}$ | D$_{MAX}$ (45M) + C$_{MAX}$ (30M) = 75M |

At $51 1/8, the system creates SS4, which represents a seller for 75,000 shares. SS4 has a preference value of 0.9, which is the lower of the preference values of Profile D (0.9) and Profile C (1.0) at $51 1/8.

| Base Kernel | C (C has a higher preference than D at $51 1/8.) |
|---|---|
| Additive Kernel | D |
| SS4$_{MIN}$ | C$_{MAX}$ (30M) + D$_{MIN}$ (45M) = 75M |
| SS4$_{MAX}$ | C$_{MAX}$ (30M) + D$_{MAX}$ (45M) = 75M |

At $51, the system creates SS5, which represents a seller for 75,000 shares. SS5 has a preference value of 0.7, which is the lower of the preference values of Profile D (0.7) and Profile C (1.0) at $51.

| Base Kernel | C (C has a higher preference than D at $51.) |
|---|---|
| Additive Kernel | D |
| SS5$_{MIN}$ | C$_{MAX}$ (30M) + D$_{MIN}$ (45M) = 75M |
| SS5$_{MAX}$ | C$_{MAX}$ (30M) + D$_{MAX}$ (45M) = 75M |

At $50 7/8, the system creates SS6, which represents a seller for 75,000 shares. SS6 has a preference value of 0.5, which is the lower of the preference values of Profile D (0.5) and Profile C (1.0) at $50 7/8.

| Base Kernel | C (C has a higher preference than D at $50 7/8.) |
|---|---|
| Additive Kernel | D |
| SS6$_{MIN}$ | C$_{MAX}$ (30M) + D$_{MIN}$ (45M) = 75M |
| SS6$_{MAX}$ | C$_{MAX}$ (30M) + D$_{MAX}$ (45M) = 75M |

At $50 ¾, the system creates SS7, which represents a seller for 75,000 shares. SS7 has a preference value of 0.1, which is the lower of the preference values of Profile D (0.1) and Profile C (1.0) at $50 ¾.

| Base Kernel | C (C has a higher preference than D at$50 3/4.) |
|---|---|
| Additive Kernel | D |
| SS7$_{MIN}$ | C$_{MAX}$ (30M) + D$_{MIN}$ (45M) = 75M |
| SS7$_{MAX}$ | CMAX (30M) + D$_{MAX}$ (45M) = 75M |

At $50 ¾, the system also creates SB1, which represents a buyer for 70,000 to 75,000 shares. SB1 has a preference value of 0.2, which is the lower of the preference values of Profile A (0.5) and Profile B (0.2) at $50 ¾. It should be noted that SB1 overlaps with SS7.

| Base Kernel | A (A has a higher preference than B at$50 3/4.) |
|---|---|
| Additive Kernel | B |
| SB1$_{MIN}$ | A$_{MAX}$ (20M) + B$_{MIN}$ (50M) = 70M |
| SB1$_{MAX}$ | A$_{MAX}$ (20M) + B$_{MAX}$ (55M) = 75M |

At $50 5/8, the system does not create a synthetic sell Profile because Profile C does not overlap with any other profiles. However, at $50 5/8, the system creates SB2, which represents a buyer for 70,000 to 75,000 shares. SB2 has a preference value of 0.5, which is the lower preference value of Profile A (0.8) and Profile B (0.5) at $50 5/8.

| Base Kernel | A (A has a higher preference than B at $50 3/4.) |
|---|---|
| Additive Kernel | B |
| SB2$_{MIN}$ | A$_{MAX}$ (20M) + B$_{MIN}$ (50M) = 70M |

SB2$_{MAX}$          A$_{MAX}$ (20M) + B$_{MAX}$ (55M) = 75M

At $50 ½, the system creates SB3, which represents a buyer for 55,100 to 75,000 shares. SB3 has a preference value of 0.9 because Profile A and Profile B both have preference values of 0.9 at $50 ½. In this instance, Profile B becomes the Base Kernel because at $50 ½, Profile A and Profile B have the same preference value (0.9), neither has standing, and both are agency Profiles. Since B has time priority, B becomes the Base Kernel.

Base Kernel          B (B has time priority over A.)
Additive Kernel      A
SB3$_{MIN}$            B$_{MAX}$ (55M) + A$_{MIN}$ (100) = 55,100
SB3$_{MAX}$           B$_{MAX}$ (55M) + A$_{MAX}$ (20M) = 75M

At $50 3/8, the system creates SB4, which represents a buyer from 70,000 to 75,000 shares with a preference value of 1.0. Both A and B have 1.0 preference at $50 3/8.

Base Kernel          A (A has standing at $50 3/8.)
Additive Kernel      B
SB4$_{MIN}$            A$_{MAX}$ (20M) + B$_{MIN}$ (50M) = 70M
SB5$_{MAX}$           A$_{MAX}$ (20M) + B$_{MAX}$ (55M) = 75M

The remaining synthetic buyers have the same volumes as SB4. From this example, it is apparent that, the overlap and resulting trade occurs at $50 ¾ with the profiles trading the following amounts: Profile A trades 20,000 shares; Profile B trades 55,000 shares; Profile C trades 30,000 shares; and Profile D trades 45,000 shares.

Preventing Exceeding the Total Quantity

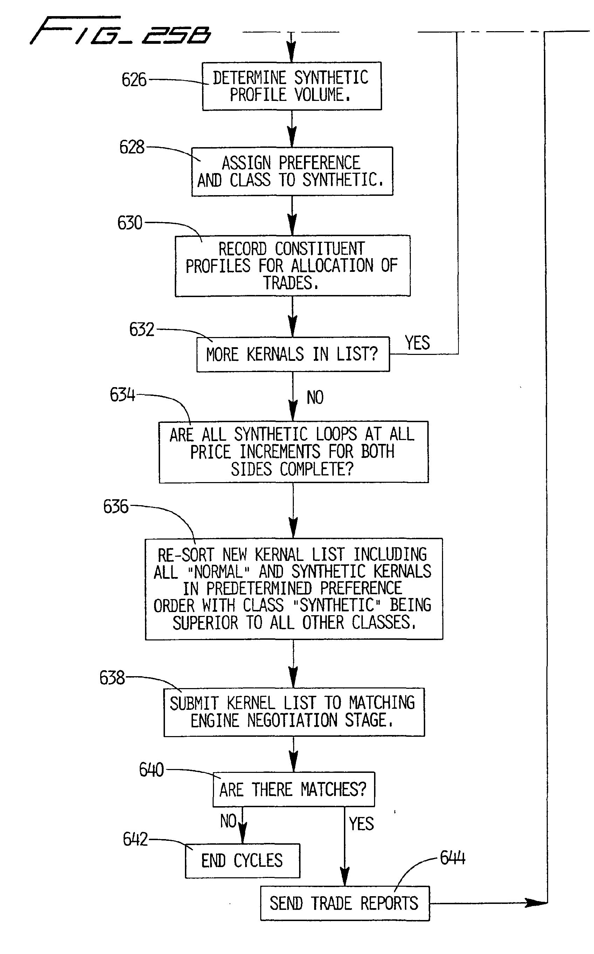

Certain profiles will have multiple kernels at a single price increment, as shown for example in Fig. 24. In this profile, there are multiple kernels at $50 because it has multiple preference values at this price. Since the system creates Synthetic Profiles in an additive process and some profiles have multiple kernels per price, there is a risk that a Synthetic Profile will be created that represents a quantity that is greater than the constituent profile's total quantity to trade at a given price. This could result in an order being "overfilled." To safeguard against overfilling a profile, the system checks to see if adding the Additive Kernel's volume to the Synthetic Profile would exceed the Additive Profile's total quantity to trade at that price. If it does, the system skips that Additive Kernel and looks at the kernel next in line.
In accordance with the sorting rules discussed hereinabove, the system sorts and looks at the kernels with the highest volume first, such that profiles with multiple kernels at a single price increment will tend to fill at their upper volumes when matched. For example, in the profile illustrated in Fig. 24, where there is a buyer represented for 500,000 shares, the system creates a Synthetic Profile at $50.00 for 496,000 shares with a preference value of 0.66. The system does so in the following manner, where the original profile kernels are in size order from left to right:

| Price | Preference | Minimum size | Maximum size |
|---|---|---|---|
| $50.00 | 1.0 | 100 | 40,000 (Standing) |
| $50.00 | 0.66 | 40,100 | 120,000 |
| $50.00 | 0.50 | 120,100 | 200,000 |
| $50.00 | 0.40 | 200,100 | 283,000 |
| $50.00 | 0.50 | 283,100 | 369,000 |
| $50.00 | 0.66 | 369,100 | 456,000 |
| $50.00 | 1.0 | 456,100 | 500,000 |

The system uses the priority rules of Preference, Standing, Class, Time, Size to sort the kernel list in the following order:

| Kernel | Price | Preference | Minimum size | Maximum size |
|--------|-------|------------|--------------|--------------|
| K1 | $50.00 | 1.0 | 100 | 40,000 (Standing) |
| K2 | $50.00 | 1.0 | 456,100 | 500,000 |
| K3 | $50.00 | 0.66 | 369,100 | 456,000 |
| K4 | $50.00 | 0.66 | 40,100 | 120,000 |
| K5 | $50.00 | 0.50 | 283,100 | 369,000 |
| K6 | $50.00 | 0.50 | 120,100 | 200,000 |
| K7 | $50.00 | 0.40 | 200,100 | 283,000 |

Then, the system selects kernel K1 as the Base Kernel and K2 as the Additive Kernel. However, K1's Maximum Size (40,000) together with K2's Maximum Size (500,000) exceeds the Profile's total quantity of 500,000 shares. Therefore, the system cannot use K2 as an Additive Kernel. Accordingly, the system looks next at K3 as the Additive Kernel. K1's Maximum Size (40,000) together with K3's Maximum Size (456,000) does not exceed 500,000, thus the synthetic Profile at $50.000 goes from 100 shares to 496,000 shares with a preference of 0.66, which is the lower of the preference values of K1 and K3.

The system continues and sets the Base Kernel to the synthetic Profile and looks at K4 as the Additive Kernel. The Synthetic Profile's Maximum Size (496,000) plus K4's Maximum Size (120,000) exceeds the Profile's total quantity of 500,000 shares. Therefore, the system cannot consider K4 as an Additive Kernel. Indeed, adding the volumes of any of the remaining kernels to the Base Kernel will exceed the Profile's total quantity. Consequently, the system uses the Synthetic Profile at $50.00 from 100 shares to 496,000 shares with a preference of 0.66 and is finished creating synthetic profiles at $50.00.

Short Sell Profiles

When constructing synthetic profiles, the system includes kernels from short sell profiles if the kernel's price creates an uptick or continues a zero-plus tick from the previous match between a buyer and seller. Since synthetic profiles get reconstructed after each match, the price at which short sell kernels can participate also gets recalculated after each match.

Price Controls

When creating synthetic profiles, the system does not create a synthetic profile that may trade more than the quantity specified at a given price of a constituent profile. If the constituent profile has an implicit or explicit price control, the system uses the price control's volume limit (i.e., the maximum number of shares allowed to trade at that price or worse) as the total volume that such a profile can trade at that price when creating the synthetic profile therefrom.

Size Controls

When creating synthetic Profiles, the system determines whether the constituent profiles have any size controls. If they do, the system only includes the portion of the profile to the right of the largest size control. For example, if a profile willing to trade 500,000 shares has a size control at 50,000 shares and another at 200,000 shares, the system only includes the portion of the Profile from 200,100 shares to 500,000 shares. Since any profile with size controls does not have standing, there are no trade through concerns with respect thereto.

Away Market Participation Restrictions

Profiles that limit the number of shares willing to participate with away markets (either ITS or SelectNet participation) may be included in synthetic profiles. The away market profiles (CQS Profiles and Nasdaq Quote Profiles) included in the match define the spread. In such cases, the "bid" is the highest price of all away market buy profiles and the "ask" is the lowest price of all away market sell profiles. When the system determines the volume for a synthetic profile, it looks at the regular profile's away market limitations and restricts the number of shares for the prices outside of the spread (i.e., the prices that are lower than the "bid" and higher than the "ask"). The prices that are inside and at the spread participate in synthetic profiles at the regular profile's full volume. The prices that are outside the spread only participate in synthetic profiles up to their restricted volume, i.e. the number of shares that are eligible to participate with away market profiles.

By way of example, assume the spread is $20 to $20 1/8. A buy profile is willing to trade 100,000 shares up to $20 ¼ and has its ITS participation set to 20%. Synthetic Profiles at $20 ¼ down to $20 3/16 include the buyer's volume up to 20,000 shares (20% of 100,000). Synthetic Profiles at and below $20 1/8 (the "ask") include the buyer's full volume of 100,000 shares. If the number of shares the profile allows to participate with the away market exceeds the away market profile's total number of shares, the system ignores the away market restriction and includes the profile's entire quantity at all prices.

The Third Stage Matching Process

In accordance with a preferred embodiment of the subject invention, after creating the synthetic profiles, the system looks for matches among the entire list of profiles. This list includes all normal or regular profiles, as well as all synthetic profiles. The procedure utilizes the matching procedure and priority variables of the Negotiation Stage. After each match between a buyer and a seller, the system reconstructs all of the synthetic profiles based on the remaining quantities, and attempts to find another match. This process continues until the system can no longer find a match.

As noted above, the basic algorithm for the third stage of the matching process commences after the Aggregation and Negotiation Stages. At such time, the system begins by constructing a list of synthetic profiles in the manner described hereinabove. Thereafter, the lists of synthetic and regular profiles is sorted according to the priority rules. Single matches are allocated between the highest priority seller and highest priority buyer. Then the list of synthetic profiles is deleted. The process continues to loop until there are no more matches to be made.

A more detailed description of the three stage matching process of the subject invention is described hereinbelow with reference to Fig. 25, wherein at the conclusion of the first and second stages of the matching algorithm of the subject invention, namely, the Aggregation and Negotiation stages, the third stage begins. At step 610, the system creates single kernel synthetic profiles. Then at step 612, the system runs a feasibility check to determine whether there is a possibility of creating additional matches. In doing so, it examines the most price aggressive kernels on each side of the market to determine whether there is a potential for overlapping interest. In order for the third stage of the matching process to be effective, kernels on either side of the market must overlap in price. Thus, if the feasibility check fails, the matching cycle terminates as step 614. However, if the feasibility check passes muster, the system proceeds to step 616 where synthetic profiles are generated on both sides of the market in the manner explained hereinabove.

With continuing reference to Fig. 25, at step 618 a valid price increment is identified, and at step 620, the buyer and seller kernel lists remaining after the Negotiation Stage are re-sorted in compliance with a set of predetermined priority rules. At this time, if a kernel has standing and the profile has more aggressive prices, the kernel's volume must be included in full in all synthetic profiles at this price level to ensure that trade through restrictions are met. The system flags these kernels so they are not traded through.

At step 622, the kernel with the highest priority in the sorted-at-price kernel list is identified as the initial base kernel. All flagged kernels with a preference value of 1.0 must be included in the initial base kernel. These flagged kernels are summed at their full volumes to ensure that no trade through can result from a trade with this synthetic profile. If there are existing synthetic kernels in this price increment, the most recent one in time is used as the base kernel.

The additive kernel is identified at step 624. The additive kernel is the next most preferred "normal" kernel at this price increment, and by definition, it has a lower priority than the base kernel. The volume range of the synthetic kernel is determined at step 626, in the manner described hereinabove. If both the base kernel and the additive kernels have been flagged, the synthetic profile is set to an "All or None" fill and represents the full volumes of both kernels so the system does not trade through either order.

At step 628, the preference is assigned to the synthetic profile and the class is set to "synthetic." The preference of a synthetic profile is always the minimum preference value of the base and additive kernels, and the class is always "synthetic," which is the highest class priority available. At step 630, the system makes a record of each of the constituent profiles which form each synthetic profile to facilitate the allocation of trading interests when a match is made. Then, at step 632, the system determines whether there are more kernels remaining in the list. If so, the system returns to step 616 where the synthetic subroutine resumes. If not, the system proceeds to step 634 where the system determines whether the synthetic subroutine has been run for all price increments on both sides of the market.

If the inquiry at step 634 results in the affirmative, at step 636 the system re-sorts the new kernel list which includes all normal or regular kernels and all synthetic kernels in a predetermined preference order, with the "synthetic" class being superior to all other classes of profiles. Then, at step 638 the kernel list is submitted to the matching engine, and the matching algorithm employed during the Negotiation Stage employed. Thereafter, at step 640 the system determines whether there are any matches. If there are no matches, the matching cycle terminates at step 642. If there are matches to be made, the system generates trade reports at step 644, and then returns to step 616.

Those skilled in the art to which the subject application appertains will readily appreciate that the third stage of the matching process could be employed independently. Thus, it is envisioned that a single stage system could be implemented using the algorithm described hereinabove without the aggregation and negotiation stages.

Determining the Trade Price

For matches made during the third stage of the process, the system determines the trade price by following the same rules employed in the Negotiation Stage. Thus, if an overlap exists among kernels with equal priority variables, the system chooses a midpoint price. Synthetic Profiles can have different compositions at different prices for the same volume. Midpoint pricing is used to determine who takes part in the transaction and at which price without bias. If the calculated midpoint price occurs at an invalid price increment, the system will round up or down to the price that is nearest to the previous trade price in the matching engine, or the previous last sale if the match is the first match occurring in the cycle.

The above-described embodiments are merely illustrative of the principles of the present invention. Other embodiments of the present invention will be apparent to those skilled in the art without departing from the spirit and scope of the present invention.

**Claims**

1. A method of trading securities over a crossing network comprising the steps of:

   a) receiving a plurality of buy and sell orders for a particular security, each order being in the form of a profile including at least one price and quantity coordinate, each coordinate having a preference value associated therewith;
   b) generating a synthetic profile from available quantities in the buy and sell profiles at each price and preference value; and
   c) matching the synthetic profile with a contra side profile to facilitate a trade therebetween.

2. A method according to Claim 1, wherein the step of generating a synthetic profile comprises the step of creating lists of kernels from the plurality of buy and sell profiles, each kernel including a plurality of contiguous coordinates at a common price and preference value between a minimum quantity and a maximum quantity.

3. A method according to Claim 2, wherein the minimum quantity and the maximum quantity are equal.

4. A method according to Claim 2, further comprising the step of designating a time stamp for each kernel, wherein the time stamp of the kernel is the time stamp of the profile from which the kernel is derived.

5. A method according to Claim 2, further comprising the step of designating a class for each kernel, wherein the class of the kernel is the class of the profile from which the kernel is derived.

6. A method according to Claim 2, further comprising the step of indicating whether each particular kernel has standing to trade.

7. A method according to Claim 2, wherein the step of generating a synthetic profile further comprises the step of aggregating a plurality of kernels at a common price to create a volume range for the synthetic profile.

8. A method according to Claim 7, wherein the step of aggregating a plurality of kernels comprises the steps of:

   a) sorting the kernels at each price increment in accordance with a set of priority rules;
   b) selecting a base kernel having a highest priority to trade;
   c) selecting an additive kernel having a second highest priority to trade; and
   d) summing the volumes of the base kernel and additive kernel.

9. A method according to Claim 8, wherein the step of sorting the kernels in accordance with a set of priority rules comprises sorting the kernels based upon a plurality of priority variables including standing, class, time and size.

10. A method according to Claim 8, wherein the step of summing the volumes of the base kernel and additive kernel comprises the steps of:

> a) adding the maximum quantity of the base kernel with the minimum quantity of the additive kernel to obtain the minimum volume of the synthetic profile; and
> b) adding the maximum quantity of the base kernel with the maximum quantity of the additive kernel.

11. A method according to Claim 1, further comprising the step of designating a class for the synthetic profile, wherein the synthetic kernel is given a highest class priority.

12. A method according to Claim 1, further comprising the step of designating a preference value for the synthetic profile, wherein the preference value for the synthetic profile is the lowest preference value of a constituent kernel.

13. A method according to Claim 1, further comprising the step of designating a time stamp for the synthetic profile, wherein the time stamp is the least preferred time of a constituent kernel.

14. A method according to Claim 1, wherein the step of matching a synthetic profile with a contra side profile comprises matching the synthetic profile with a contra side profile in accordance with a second set of priority rules.

15. A method according to Claim 14, wherein the step of matching the synthetic profile with a contra side profile comprises the step of matching the synthetic profile with a contra side synthetic profile.

16. A method according to Claim 7, further comprising the step of determining, for a synthetic profile generated from a plurality of profiles on one side of a market each having standing and overlapping in price, whether each of said plurality of profiles has standing at a more aggressive price, and if each of said plurality of profiles has standing at a more aggressive price, summing the volume of said plurality of profiles such that the synthetic profile has a single volume, and providing "All or None" eligibility for the synthetic profile.

17. A method of trading securities over a crossing network comprising the steps of:

> a) receiving a plurality of buy and sell limit orders for a particular security, each limit order having a limit price and a volume associated therewith;
> b) generating a synthetic limit order by aggregating available volume from at least two limit orders at a particular price increment; and
> c) matching the synthetic limit order with a contra side limit order to facilitate a trade therebetween.

18. A method according to Claim 17, further comprising the step of selecting a price increment that maximizes volume.

19. A method according to Claim 17, wherein the step of matching the synthetic limit order with a contra side limit order comprises the step of matching the synthetic limit order with a contra side synthetic limit order.

20. A method according to Claim 19, further comprising the steps of determining an overlapping interest between the matched contra side synthetic limit orders, and selecting a midpoint price to execute the trade based upon the overlapping interest, so long as the midpoint price is a legitimate price.

21. A method according to Claim 20, further comprising the step of selecting a price closest to a last trade price of the crossing network if the midpoint price is not a legitimate price.

22. A method of trading securities over a crossing network comprising the steps of:

> a) receiving a plurality of buy and sell orders for a particular security;
> b) conducting a first matching cycle in which contra side buy and sell orders having a first set of characteristics are matched in accordance with a first set of priority rules to facilitate a trade therebetween;
> c) conducting a second matching cycle in which contra side buy and sell orders having a second set of characteristics are matched in accordance with a second set of priority rules to facilitate a trade therebetween;
> d) generating synthetic buy and sell orders by aggregating available volume remaining in the plurality of buy and sell orders at the conclusion of the first and second matching cycles; and
> e) conducting a third matching cycle in which synthetic buy and sell orders are matched with contra side orders in accordance with a set of priority rules to facilitate a trade therebetween.

23. A method according to Claim 22, wherein the step of matching a synthetic order with a contra side order comprises the step of matching the synthetic order with a contra side synthetic order.

24. A method according to Claim 23, wherein the step of receiving a plurality of buy and sell orders, comprises the step of receiving a plurality of buy and sell profiles, each profile including a plurality of price and quantity coordinates, each coordinate having a preference value associated therewith representing a willingness to trade the security at such a price and quantity.

25. A method according to Claim 24, wherein the step of conducting the first matching cycle comprises the steps of:

   a) generating a set of buy kernels from the plurality of buy profiles and a set of sell kernels from the plurality of sell profiles, each kernel including a plurality of contiguous coordinates at a common price expressing a maximum preference value over a particular volume range;
   b) aggregating volume from plural kernels on one side of the market to satisfy the volume requirements of a contra side kernel;
   c) determining whether multiple kernels with standing on each side of the market overlap in price; and
   d) clearing multiple overlapping kernels with standing on both sides of the market.

26. A method according to Claim 25, wherein the step of clearing multiple overlapping kernels comprises the steps of:

   a) generating supply and demand schedules as a function of price, representing all trading interest with standing;
   b) selecting a price that matches a maximum volume; and
   c) executing trades represented by the price that matches the maximum volume.

27. A method according to Claim 26, wherein the step of conducting the second matching cycles comprises the steps of:

   a) calculating mutual preference profiles between all pairs of buy and sell profiles;
   b) generating a list of all non-zero mutual preference coordinates from all mutual preference profiles;
   c) sequentially assembling prospective matches from the list of mutual preference coordinates in order of decreasing mutual preference;
   d) verifying that each match does not violate a predetermined set of constraints before executing a trade between the matched profiles; and
   e) executing trades between the matched profiles.

28. A method according to Claim 27, wherein the step of generating synthetic buy and sell profile comprises the step of creating lists of contra side kernels from the plurality of buy and sell profiles, each kernel including a plurality of contiguous coordinates at a common price and preference value between a minimum quantity and a maximum quantity.

29. A method according to Claim 28, wherein the step of generating a synthetic profile further comprises the step of aggregating a plurality of kernels at a common price to create a volume range for the synthetic profile.

30. A method according to Claim 29, wherein the step of aggregating a plurality of kernels comprises the steps of:

   a) sorting the kernels at each price increment and preference value in accordance with a third set of priority rules;
   b) selecting a base kernel having a highest priority to trade;
   c) selecting an additive kernel having a second highest priority to trade; and
   d) summing the volumes of the base kernel and additive kernel.

31. A method according to Claim 30, wherein the step of sorting the kernels in accordance with the third set of priority rules comprises sorting the kernels based upon a plurality of priority variables including standing, class, time and size.

32. A method according to Claim 30, wherein the step of summing the volumes of the base kernel and additive kernel comprises the steps of:

a) adding the maximum quantity of the base kernel with the minimum quantity of the additive kernel to obtain the minimum volume of the synthetic profile; and
b) adding the maximum quantity of the base kernel with the maximum quantity of the additive kernel.

FIG. 1

FIG. 2

$$\text{FIG. 2A}$$

| | 1M | 10M | | 20M | | 30M | | 40M | | 50M | | 60M | | 70M | | 80M | | 90M | 100M |
|---|---|---|---|---|---|---|---|---|---|---|---|---|---|---|---|---|---|---|---|
| 100 1/16 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 |
| 100 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | [1.0] |
| 99 15/16 | 0.83 | 0.83 | 0.83 | 0.86 | 0.86 | 0.86 | 0.86 | 0.86 | 0.86 | 0.86 | 0.88 | 0.88 | 0.88 | 0.88 | 0.88 | 0.88 | 0.88 | 0.89 | 0.89 | 0.89 |
| 99 7/8 | 0.67 | 0.67 | 0.67 | 0.71 | 0.71 | 0.71 | 0.71 | 0.71 | 0.71 | 0.71 | 0.75 | 0.75 | 0.75 | 0.75 | 0.75 | 0.75 | 0.78 | 0.78 | 0.78 | 0.78 |
| 99 13/16 | 0.5 | 0.5 | 0.5 | 0.57 | 0.57 | 0.57 | 0.57 | 0.57 | 0.57 | 0.57 | 0.63 | 0.63 | 0.63 | 0.63 | 0.63 | 0.63 | 0.67 | 0.67 | 0.67 | 0.67 |
| 99 3/4 | 0.33 | 0.33 | 0.33 | 0.43 | 0.43 | 0.43 | 0.43 | 0.43 | 0.43 | 0.43 | 0.5 | 0.5 | 0.5 | 0.5 | 0.5 | 0.5 | 0.56 | 0.56 | 0.56 | 0.56 |
| 99 11/16 | 0.17 | 0.17 | 0.17 | 0.29 | 0.29 | 0.29 | 0.29 | 0.29 | 0.29 | 0.29 | 0.38 | 0.38 | 0.38 | 0.38 | 0.38 | 0.38 | 0.44 | 0.44 | 0.44 | 0.44 |
| 99 5/8 | 0.0 | 0.0 | 0.0 | 0.14 | 0.14 | 0.14 | 0.14 | 0.14 | 0.14 | 0.14 | 0.25 | 0.25 | 0.25 | 0.25 | 0.25 | 0.25 | 0.33 | 0.33 | 0.33 | 0.33 |
| 99 9/16 | 0.0 | 0.0 | 0.0 | 0.0 | 0.0 | 0.0 | 0.0 | 0.0 | 0.0 | 0.0 | 0.13 | 0.13 | 0.13 | 0.13 | 0.13 | 0.13 | 0.22 | 0.22 | 0.22 | 0.22 |
| 99 1/2 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.11 | 0.11 | 0.11 | 0.11 |
| 99 7/16 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | [0.0] |
| 99 3/8 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 |

FIG. 3A

FIG. 3B

FIG. 3C

FIG. 3D

FIG. 4

| AMD | | | | | | | ☐◻☒ |
|---|---|---|---|---|---|---|---|
| FILE | EDIT | PROFILE | DISPLAY | | | | |

| SIDE | QUANTITY | SYMBOL | PRC/PEG TO | FLOOR | MIN MATCH | |
|---|---|---|---|---|---|---|
| SIDE ▽ | 1,500,000 | AMD ▽ | 20 | | | |

| BIDIR UP | DISCR | REFID | | | | | | | |
|---|---|---|---|---|---|---|---|---|---|
| | 0 | S123 | PROPS... | FILLS... | NEW | CANCEL | SUSPEND | SAVE | SUBMIT |

$$FIG.\ 4A$$

TEMPLATES

USER

☐ FIRM

◻ AGGRESSIVE SELL

◻ LIMIT SELL

◻ NOT HELD SELL

◻ SELL W/MINIMUM SIZE

◻ SCALED UP SELL

◻ ALL OR NONE SELL

$$FIG.\ 5A$$

60

## Load Pattern

| Type 1 | Type 2 | Type 3 | Type 4 |

Saved Patterns

ibm_seller_1
ibm_buyer_1

( Execute )   ( View )   ( Dismiss )

# FIG. 5

EP 1 118 953 A2

## FIG_6A

(QUIT) (CLEAR) (RESET) (APPLY) (PATTERNS<) (REMOVE BOUNDARY)

—— ORDER DESCRIPTION ——

SIDE [<] BUY SYMBOL  IBM    MAX QUANTITY 200,000

TIME IN FORCE: [UNTIL CANCELLED| END OF DAY | MINUTES] ⇒ 20

—— CURSOR TYPE ——        —— CURSOR POSITION ——

(SEL<) (MORE) (LESS) (BOUNDARY) (EDIT)    PRICE: 75.50     SIZE: 5250

| Size | | | | | | | | | | | | | | | | | |
|---|---|---|---|---|---|---|---|---|---|---|---|---|---|---|---|---|---|
| 9750 | B1 | | | | | | | | | | | | | | | | |
| 9000 | | 0.2 | 0.4 | 0.3 | 0.6 | 1.0 | 1.0 | 1.0 | 0.9 | 0.9 | 0.9 | 0.8 | 0.8 | 0.7 | | | |
| 8250 | | 0.2 | 0.5 | 0.7 | 0.4 | 0.6 | 1.0 | 1.0 | 1.0 | 0.9 | 0.9 | 0.9 | 0.8 | 0.8 | 0.7 | | |
| 7500 | 0.1 | 0.3 | 0.1 | 0.6 | 0.7 | 0.4 | 0.4 | 0.8 | 1.0 | 1.0 | 0.9 | 0.9 | 0.9 | 0.8 | 0.8 | 0.7 | |
| 6750 | | 0.2 | 0.3 | 0.3 | 0.5 | 0.6 | 0.7 | 0.4 | 0.4 | 0.7 | 1.0 | 0.9 | 0.7 | 0.9 | 0.6 | 0.8 | 0.7 |
| 6000 | B2 | 0.2 | 0.3 | 0.3 | 0.4 | 0.6 | 0.6 | 0.7 | 0.5 | 0.4 | 1.0 | 1.0 | 0.5 | 0.8 | 0.9 | 0.9 | 0.8 |
| 5250 | 0.1 | 0.2 | 0.1 | 0.4 | 0.4 | 0.6 | 0.6 | 0.7 | 0.4 | 0.7 | 1.0 | 1.0 | 0.8 | 0.9 | 0.9 | 0.8 | |
| 4500 | | 0.1 | 0.2 | 0.1 | 0.3 | 0.4 | 0.6 | 0.3 | 0.8 | 0.7 | 1.0 | 1.0 | 1.0 | 1.0 | 0.9 | 0.8 | |
| 3750 | | | 0.1 | 0.1 | 0.2 | 0.2 | 0.5 | 0.6 | 0.4 | 0.4 | 0.4 | 0.7 | 1.0 | 1.0 | 0.9 | 0.9 | |
| 3000 | | | B3 | 0.2 | 0.3 | 0.4 | 0.5 | 0.6 | 0.6 | 0.8 | 0.9 | 1.0 | 1.0 | 1.0 | 0.9 | | |
| 2250 | | | | 0.1 | 0.2 | 0.3 | 0.4 | 0.3 | 0.6 | 0.5 | 0.9 | 1.0 | 1.0 | 1.0 | 0.9 | | |
| 1500 | | | | | 0.2 | 0.2 | 0.3 | 0.4 | 0.6 | 0.7 | 0.7 | 0.9 | 1.0 | 1.0 | 1.0 | | |
| 750 | | | | | B4 | 0.2 | 0.3 | 0.4 | 0.6 | 0.7 | 0.8 | 0.9 | 1.0 | 1.0 | 1.0 | | |
| 0 | | | | | | | | | | | | | | | | | |

70.00    70.75    71.50    72.25    73.00    73.75    74.50

48

## FIG_6B

**— SURFACE DESCRIPTION —**

CENTER PRICE 74.00   MIN SIZE 750   PRICE INTERVAL

PRICE RANGE 8.00   MAX SIZE 10000

| 1/8 | 1/2 |
| 1/4 | 1 |

PRICE   | ABSOLUTE | RELATIVE |

**— DISPLAY —**

( UPDATE GRID )   ( DISPLAY SURFACE )

21

**LOAD PATTERN**

| TYPE 1 | TYPE 2 | TYPE 3 | TYPE 4 |

SAVED PATTERNS

IBM_SELL_4
IBM_SELL_4
IBM_SELL_3
IBM_SELL_2
IBM_SELL_1
IBM_SELL_3
IBM_SELL_2

60

( EXECUTE )   ( VIEW )   ( DISMISS )

0.7

0.8 0.7

0.8 0.7 0.7

0.9 0.8 0.7

0.9 0.8 0.8 0.7

0.9 0.9 0.8 0.8 0.7

0.8 0.8 0.9 0.8 0.8 0.7

1.0 0.9 0.9 0.9 0.8 0.8 0.7

75.25   76.00   76.75   77.50

FIG. 6C

EP 1 118 953 A2

# FIG_ 7

FIG. 7A

EP 1 118 953 A2

FIG. 8

FIG. 9A

FIG. 9B

FIG. 9C

FIG_10

EP 1 118 953 A2

FIG. 11

THE VOLUME CONTROL LIMITS TOTAL VOLUMES IN TRADES OF 300,000 SHARES OR LESS TO 400,000 SHARES

THE PRICE CONTROL LIMITS TOTAL VOLUME AT $39 15/16 AND ABOVE TO 510,00 SHARES

EP 1 118 953 A2

IMPLICIT PRICE CONTROLS ARE GENERATED AT:
$40 1/8        20,000 SHARES
$40 1/16        30,000 SHARES
$40          40,000 SHARES
$39 15/16        90,000 SHARES

FIG_12

NO IMPLICIT PRICE CONTROLS ARE
GENERATED FOR PROFILES OF THIS SHAPE

FIG_ 13

FIG_14

COORDINATES IN
THESE PRICE ROWS
DO NOT HAVE STANDING

COORDINATES IN
THESE PRICE ROWS
HAVE STANDING

| | 1M | 5M | 10M | 15M | 20M | 25M | 30M | 35M | 40M | 45M | 50M | 55M | 60M | 65M | 70M | 75M | 80M | 85M | 90M | 95M | 100M |
|---|---|---|---|---|---|---|---|---|---|---|---|---|---|---|---|---|---|---|---|---|---|
| 40 1/2 | | | | | | | | | | | | | | | | | | | | | |
| 40 7/16 | | | | | | | | | | | | | | | | | | | | | |
| 40 3/8 | | | | | | | | | | | | | | | | | | | | | |
| 40 5/16 | | | | | | | | | | | | | | | | | | | | | |
| 40 1/4 | | | | | | | | | | | | | | | | | | | | | |
| 40 3/16 | | | | | | | | | | | | | | | | | | | | | |
| 40 1/8 | | | | | | | | | | | | | | | | | | | | | |
| 40 1/16 | | | | | | | | | | | | | | | | | | | | | |
| 40 | | | | | | | | | | | | | | | | | | | | | |
| 39 15/16 | | | | | | | | | | | | | | | | | | | | | |
| 39 7/8 | | | | | | | | | | | | | | | | | | | | | |
| 39 13/16 | | | | | | | | | | | | | | | | | | | | | |
| 39 3/4 | | | | | | | | | | | | | | | | | | | | | |
| 39 11/16 | | | | | | | | | | | | | | | | | | | | | |
| 39 5/8 | | | | | | | | | | | | | | | | | | | | | |
| 39 9/16 | | | | | | | | | | | | | | | | | | | | | |
| 39 1/2 | | | | | | | | | | | | | | | | | | | | | |

_FIG_15_

START MATCH — 200

MARKET DATA

READ PROFILIES AND INITIALIZE KERNEL LISTS — 210

CANCELS

AGGREGATE KERNELS WITH "1" PREFERENCE — 220

TRADE RESULTS

CANCELS

CONSTRUCT TRADES WITH PARTIAL MUTUAL PREFERENCE — 230

TRADE RESULTS

END — 240

FIG_16

SORTED KERNEL LISTS — 300

INITIALIZE FLAGS — 310

320 — WHILE NOT DONE

330 — ANY PROFILES CANCELED ?

YES — REMOVE KERNELS FROM CANCELED PROFILES — 340

NO

350 — CROSSED MARKET ?

YES — PERFORM TWO SIDED AGGREGATION — 360

370 — TRADES

NO

380 — KERNEL AVAILABLE ?

NO — AGGREGATION DONE — 420

YES

CONSTRUCT VALID TRADES USING KERNEL AS TARGET — 390

TRADES — 400

MARK KERNEL AS INACTIVE — 410

FIG_17

FROM AGGREGATION — 500

CONSTRUCT CROSS LIST OF NON-ZERO MUTUAL PREFERENCES COORDINATES — 510

SORT CROSS LIST IN ORDER OF MUTUAL PREFERENCE — 520

FOR EACH CROSS LIST ENTRY — 530

WHILE BUYER AND SELLER STILL HAVE VOLUME AVAILABLE — 540

TRADE ALLOWED BY STANDING TABLE ? — 550

NO

YES

TRADES — 560

DECREMENT VOLUMES — 570

END WHILE VOLUMES AVAILABLE — 580

NEXT CROSS — 590

FIG_18

FIG_19

# FIG_20

# FIG_21

FIG_22

FIG_23

FIG. 24

AGGREGATION
NEGOTIATION

*FIG_25A*

BEGIN — 610

612 —
FEASIBILITY
CHECK

FAIL

614 —
END
CYCLE

PASS

616 —
FOR BOTH THE BUY
AND SELL "BOOKS"

618 —
FOR EACH VALID PRICE
INCREAMENT

620 —
RESORT KERNAL LIST BY PRESENT
PRIORITY RULES AT EACH PRICE INCREMENT.

IF THE KERNAL HAS A PREFERENCE
VALUE OF 1.0, HAS STANDING, AND
THE PROFILE HAS MORE PRICE
AGGRESSIVE VALUES, FLAG IT AS
REQUIRED FOR ALL SYNTHETIC
PROFILES.

622 —
IDENTIFY "BASE"
KERNAL.

624 —
IDENTIFY THE "ADDITIVE"
KERNEL.

FIG_25B

626 — DETERMINE SYNTHETIC PROFILE VOLUME.

628 — ASSIGN PREFERENCE AND CLASS TO SYNTHETIC.

630 — RECORD CONSTITUENT PROFILES FOR ALLOCATION OF TRADES.

632 — MORE KERNALS IN LIST? — YES

NO

634 — ARE ALL SYNTHETIC LOOPS AT ALL PRICE INCREMENTS FOR BOTH SIDES COMPLETE?

636 — RE-SORT NEW KERNAL LIST INCLUDING ALL "NORMAL" AND SYNTHETIC KERNALS IN PREDETERMINED PREFERENCE ORDER WITH CLASS "SYNTHETIC" BEING SUPERIOR TO ALL OTHER CLASSES.

638 — SUBMIT KERNEL LIST TO MATCHING ENGINE NEGOTIATION STAGE.

640 — ARE THERE MATCHES?

NO

YES

642 — END CYCLES

644 — SEND TRADE REPORTS